(19) **Europäisches Patentamt**
**European Patent Office**
**Office européen des brevets**

(11) **EP 4 443 193 A1**

(12) **EUROPEAN PATENT APPLICATION**

(43) Date of publication:
**09.10.2024 Bulletin 2024/41**

(21) Application number: **23275056.2**

(22) Date of filing: **05.04.2023**

(51) International Patent Classification (IPC):
***G01S 7/40*** *(2006.01)*

(52) Cooperative Patent Classification (CPC):
**G01S 7/4052**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **APPARATUS AND METHOD**

(57) A method of validating a RADAR model, comprising a transmit chain, a receive chain and a data processing chain, corresponding to a RADAR system, the method implemented by a computer comprising a processor and a memory, the method comprising:
obtaining an acquired output from the RADAR system of an environment including a target and optionally, clutter (2802);
creating the RADAR model corresponding to the RADAR system (2804);
determining a simulated output of the RADAR model for the environment including the target and optionally, the clutter, by simulating the RADAR model (2806); and
validating the RADAR model by comparing the simulated output and the acquired output (2808).

Fig.28

EP 4 443 193 A1

**Description**

FIELD OF THE INVENTION

The present invention relates to RADAR systems. Particularly, the present invention relates to simulation of RADAR systems and/or validation of simulated RADAR systems.

BACKGROUND

A conventional RADAR system includes a transmitter (i.e. a transmit chain), configured to emit a radio frequency, RF, signal (i.e. radio waves, also known as a radar signal) into an environment, for example including a target (and optionally clutter), and a receiver (i.e. a receive chain), configured to receive respective reflected RF signals from the target (and/or from the optional clutter). In this way, the target may be detected using the received respective reflected RF signals, for example by a data processor (i.e. data processing chain).

There remains a need to improve development of RADAR systems.

SUMMARY OF THE INVENTION

A first aspect provides a method of simulating a RADAR system defined by a corresponding RADAR model comprising a transmit chain, a receive chain and a data processing chain, the method implemented by a computer comprising a processor and a memory, the method comprising:

transmitting, by the transmit chain, a radio frequency, RF, signal into an environment including a target and optionally, clutter;
calculating respective reflected RF signals of the transmitted RF signal from the target and from the optional clutter;
receiving, by the receive chain, the respective reflected RF signals;
detecting, by the data processing chain, the target using the received respective reflected RF signals; and
determining a simulated output of the RADAR system using a result of detecting the target.

A second aspect provides a method of providing a RADAR system, the method implemented, at least in part, by a computer comprising a processor and a memory, the method comprising:

simulating a RADAR model, comprising a transmit chain, a receive chain and a data processing chain, corresponding to the RADAR system; and
providing the RADAR system using a result of simulating the RADAR model.

A third aspect provides a RADAR system provided by a method according to the second aspect.

A fourth aspect computer comprising a processor and a memory configured to implement a method according to any of the first aspect and/or the second aspect, a computer program comprising instructions which, when executed by a computer comprising a processor and a memory, cause the computer to perform a method according to any of the first aspect and/or the second aspect or a non-transient computer-readable storage medium comprising instructions which, when executed by a computer comprising a processor and a memory, cause the computer to perform a method according to any of the first aspect and/or the second aspect.

A fifth aspect provides a method of validating a RADAR model, comprising a transmit chain, a receive chain and a data processing chain, corresponding to a RADAR system, the method implemented by a computer comprising a processor and a memory, the method comprising:

obtaining an acquired output from the RADAR system of an environment including a target and optionally, clutter;
creating the RADAR model corresponding to the RADAR system;
determining a simulated output of the RADAR model for the environment including the target and optionally, the clutter, by simulating the RADAR model; and
validating the RADAR model by comparing the simulated output and the acquired output.

A sixth aspect provides a method of providing a RADAR system, the method implemented, at least in part, by a computer comprising a processor and a memory, the method comprising:

validating a RADAR model, comprising a transmit chain, a receive chain and a data processing chain, corresponding to the RADAR system; and

providing the RADAR system using a result of validating the RADAR model.

A seventh aspect provides a RADAR system provided by a method according to any of the fifth aspect and/or the sixth aspect.

An eighth aspect provides a computer comprising a processor and a memory configured to implement a method according to any of the fifth aspect and/or the sixth aspect, a computer program comprising instructions which, when executed by a computer comprising a processor and a memory, cause the computer to perform a method according to any of the fifth aspect and/or the sixth aspect or a non-transient computer-readable storage medium comprising instructions which, when executed by a computer comprising a processor and a memory, cause the computer to perform a method according to any of the fifth aspect and/or the sixth aspect.

DETAILED DESCRIPTION OF THE INVENTION

A first aspect provides a method of simulating a RADAR system defined by a corresponding RADAR model comprising a transmit chain, a receive chain and a data processing chain, the method implemented by a computer comprising a processor and a memory, the method comprising:

transmitting, by the transmit chain, a radio frequency, RF, signal into an environment including a target and optionally, clutter;
calculating respective reflected RF signals of the transmitted RF signal from the target and from the optional clutter;
receiving, by the receive chain, the respective reflected RF signals;
detecting, by the data processing chain, the target using the received respective reflected RF signals; and
determining a simulated output of the RADAR system using a result of detecting the target.

In one example, transmitting, by the transmit chain, the RF signal into the environment including the target and optionally, the clutter, comprises: generating a continuous RF signal having a provided amplitude envelope; optionally converting the continuous RF signal into a pulsed, amplitude-modulated RF signal; and optionally amplifying the pulsed, amplitude-modulated RF signal.
In one example, the RADAR model comprises a transmit phase lock loop, PLL, and generating the continuous RF signal having the provided amplitude envelope comprises generating the continuous RF signal using the PLL.
In one example, the RADAR model comprises an envelope generator and wherein generating the continuous RF signal having the provided amplitude envelope comprises providing the amplitude envelope using the envelope generator.
In one example, the RADAR model comprises a vector modulator and converting the continuous RF signal into the pulsed, amplitude-modulated RF signal comprises converting the continuous RF signal into the pulsed, amplitude-modulated RF signal using the vector modulator.
In one example, the RADAR model comprises an amplifier and amplifying the pulsed, amplitude-modulated RF signal comprises amplifying the pulsed, amplitude-modulated RF signal using the amplifier.
In one example, the RADAR model comprises a transmitter and transmitting the RF signal into the environment including the target and optionally, the clutter, comprises transmitting the RF signal into the environment including the target and optionally, the clutter, comprises using the transmitter.
In one example, the target comprises and/or is a moving target or a stationary target and optionally, wherein the clutter comprises and/or is stationary clutter.
In one example, calculating the respective reflected RF signals of the transmitted RF signal from the target and from the optional clutter comprises:
In one example, receiving, by the receive chain, the respective reflected RF signals comprises: receiving the respective reflected RF signals of the transmitted RF signal from the target and from the optional clutter; optionally adding thermal noise to the received, respective reflected RF signals; optionally amplifying the received, respective reflected RF signals; optionally down-converting the received, respective reflected RF signals for example to a first intermediate frequency, IF1, signal; optionally filtering the IF1 signal; and optionally down-converting the IF1 signal to a second intermediate frequency, IF2, signal.
In one example, detecting, by the detect chain, the target using the received respective reflected RF signals comprises processing, by the data processing chain, the received respective reflected RF signals, including one or more of: Hilbert transforming the received respective reflected RF signals; match filtering the received respective reflected RF signals; windowing the received respective reflected RF signals; Fast Fourier Transforming, FFT, the received respective reflected RF signals; and generating a range-Doppler plot.
In one example, the method comprises adapting the RADAR model, for example the transmit chain, the receive chain and the data processing chain.

In one example, updating the RADAR model comprises updating the RADAR model using the simulated output of the RADAR system.

In one example, the method comprises modifying the target and/or the optional clutter; and wherein calculating the respective reflected RF signals of the transmitted RF signal from the target and from the optional clutter comprises calculating the respective reflected RF signals of the transmitted RF signal from the modified target and from the optional modified clutter.

In one example, the transmit block comprises a quantum oscillator.

The microwave generator unit is a comprehensive device capable of generating signals in the microwave domain by phase-coherent division of high-fidelity optical signals using the frequency comb technology. An MGU incudes a frequency comb to down-convert the optical signals and an ultra-stable optical system acting as a reference for the frequency comb. The frequency comb can also be referenced by an external optical signal. The frequency comb is a pulsed mode-locked laser that produces evenly spaced frequency outputs in the frequency domain. Mode locking is a technique for generating a pulsed laser in the order of picosecond or femtosecond. The evenly spaced frequency outputs, known as 'teeth', are spaced by the pulsed laser's repetition rate frequency ($f_{rep}$). The frequency of each tooth is equivalent to the tooth number (mode number) multiplied by the spacing between the teeth. The change in the pulse-to-pulse phase of the laser introduces another parameter called the carrier-envelope offset frequency ($f_{ceo}$).

The MGU can generate frequencies in both the optical and RF domain. The RF signals generated by the MGU have low phase noise characteristics due to the conversion of optical signals to RF. The MGU also has the potential to lock to an optical atomic reference and to translate the ultra-high precision and stability of an optical atomic clock in the RF domain. The MGU is used in applications including deep space navigation, precision metrology, telecommunications and next-generation wireless communications. The low phase noise RF outputs make the MGU a potential candidate for realising quantum oscillators in radars. Whilst an MGU-generated RF source locked to an optical atomic clock will be the ultimate realisation of a quantum oscillator for radar applications, the RF signal generated from the MGU locked to its cavity-stabilised internal laser is referred to as one manifestation of quantum oscillators in the thesis.

Atomic clocks can be subdivided into two categories based on frequency: microwave and optical. Optical atomic clocks are oscillators with the highest level of frequency stability. There are two primary categories of optical clocks: the first uses one or more trapped ions, second uses a large number of neutral atoms in a lattice of light with a 'magic' wavelength. An optical atomic clock mainly consists of a local oscillator and an atomic reference. The local oscillator provides the optical frequency that will be disciplined to the atomic reference. A carefully produced sample of atoms or a single ion typically has some "forbidden" electronic transition that serves as the atomic reference. Electronic transitions that are prohibited under the electric dipole approximation are known as forbidden transitions. The forbidden transition can be made possible by applying an external magnetic field. These forbidden transitions have very narrow linewidth making them a useful well-defined frequency reference. By tuning the frequency of the local oscillator (laser) to the optical atomic resonance frequency, the optical clock is referenced to the atomic transition. The highest frequency stability of the optical atomic clocks is attributed to the narrow linewidth of the transition. The RF output of an MGU locked to an optical atomic clock is another potential candidate for realising quantum oscillators in radars.

A second aspect provides a method of providing a RADAR system, the method implemented, at least in part, by a computer comprising a processor and a memory, the method comprising:

> simulating a RADAR model, comprising a transmit chain, a receive chain and a data processing chain, corresponding to the RADAR system; and
> providing the RADAR system using a result of simulating the RADAR model.

The method according to the second aspect may include any of the steps described with respect to the first aspect.

In one example, the method comprises updating the RADAR model based on the result of validating the RADAR model.

In one example, the method comprises validating the updated RADAR model.

A third aspect provides a RADAR system provided by a method according to the second aspect.

A fourth aspect computer comprising a processor and a memory configured to implement a method according to any of the first aspect and/or the second aspect, a computer program comprising instructions which, when executed by a computer comprising a processor and a memory, cause the computer to perform a method according to any of the first aspect and/or the second aspect or a non-transient computer-readable storage medium comprising instructions which, when executed by a computer comprising a processor and a memory, cause the computer to perform a method according to any of the first aspect and/or the second aspect.

A fifth aspect provides a method of validating a RADAR model, comprising a transmit chain, a receive chain and a data processing chain, corresponding to a RADAR system, the method implemented by a computer comprising a processor and a memory, the method comprising:

obtaining an acquired output from the RADAR system of an environment including a target and optionally, clutter;
creating the RADAR model corresponding to the RADAR system;
determining a simulated output of the RADAR model for the environment including the target and optionally, the clutter, by simulating the RADAR model; and
validating the RADAR model by comparing the simulated output and the acquired output.

The method according to the fifth aspect may include any of the steps described with respect to the first aspect and/or the second aspect.

In one example, comparing the simulated output and the acquired output comprises comparing respective signal powers and/or signal to noise ratios, SNR, values of the transmit chain, the receive chain and/or the data processing chain with expected values thereof.

In one example, comparing respective signal powers and/or signal to noise ratios, SNR, values of the transmit chain, the receive chain and/or the data processing chain with expected values thereof comprises comparing respective signal powers and/or signal to noise ratios, SNR, values of outputs of the transmit chain, the receive chain and/or the data processing chain with expected values thereof.

In one example, comparing the simulated output and the acquired output comprises comparing fundamental parameters of the simulated output and fundamental parameters of the acquired output.

In one example, comparing fundamental parameters of the simulated output and fundamental parameters of the acquired output comprises comparing fundamental parameters of a generated range-Doppler plot of the simulated output and fundamental parameters of a range-Doppler plot of the acquired output.

In one example, comparing the simulated output and the acquired output comprises comparing the clutter to noise ratio, CNR, the signal to noise ratio, SNR, and/or the thermal noise floor of the simulated output and the acquired output.

In one example, comparing the CNR, the SNR, and/or the thermal noise floor of the simulated output and the acquired output comprises comparing the CNR, the SNR, and/or the thermal noise floor of of a generated range-Doppler plot of the simulated output and of a range-Doppler plot of the acquired output.

In one example, the CNR accounts for thermal noise.

In one example, the method comprises:

adapting the RADAR model, for example the transmit chain, the receive chain and the data processing chain; and optionally, modifying the target and/or the optional clutter;
wherein calculating the respective reflected RF signals of the transmitted RF signal from the target and from the optional clutter comprises calculating the respective reflected RF signals of the transmitted RF signal from the modified target and from the optional modified clutter.

In one example, the transmit block comprises a quantum oscillator.

A sixth aspect provides a method of providing a RADAR system, the method implemented, at least in part, by a computer comprising a processor and a memory, the method comprising:

validating a RADAR model, comprising a transmit chain, a receive chain and a data processing chain, corresponding to the RADAR system; and
providing the RADAR system using a result of validating the RADAR model.

The method according to the sixth aspect may include any of the steps described with respect to the first aspect, the second aspect and/or the fifth aspect.

In one example, the method comprises adapting the RADAR model based on the result of validating the RADAR model.

In one example, the method comprises validating the adapted RADAR model.

A seventh aspect provides a RADAR system provided by a method according to any of the fifth aspect and/or the sixth aspect.

An eighth aspect provides a computer comprising a processor and a memory configured to implement a method according to any of the fifth aspect and/or the sixth aspect, a computer program comprising instructions which, when executed by a computer comprising a processor and a memory, cause the computer to perform a method according to any of the fifth aspect and/or the sixth aspect or a non-transient computer-readable storage medium comprising instructions which, when executed by a computer comprising a processor and a memory, cause the computer to perform a method according to any of the fifth aspect and/or the sixth aspect.

*Definitions*

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

BRIEF DESCRIPTION OF THE DRAWINGS

For a better understanding of the invention, and to show how exemplary embodiments of the same may be brought into effect, reference will be made, by way of example only, to the accompanying diagrammatic Figures, in which:

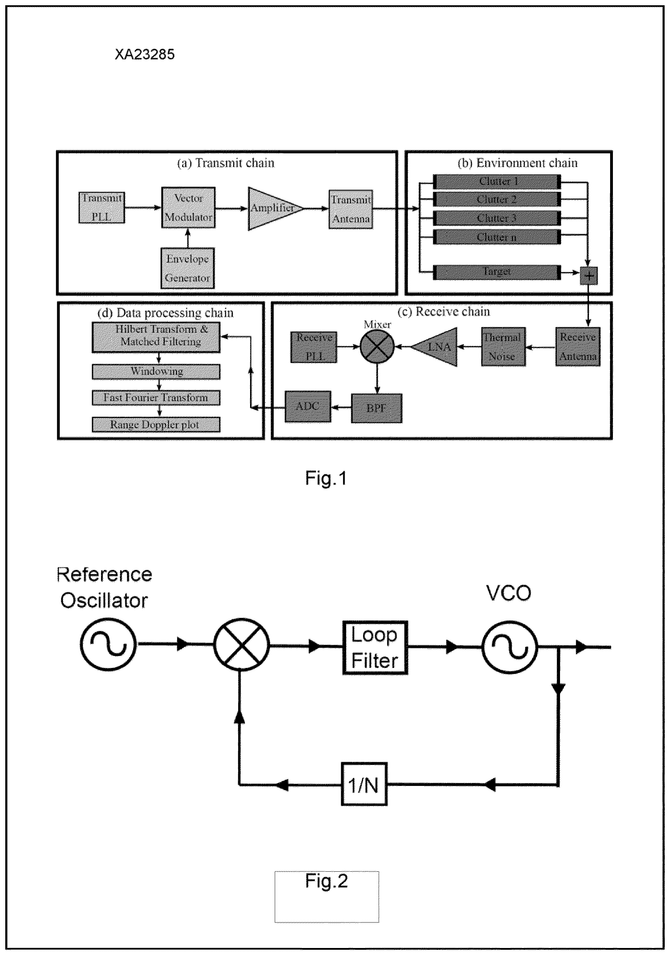

Figure 1 schematically depicts a front end model of a whole radar model in a simulation, according to an exemplary embodiment. The front end comprises four main sections. The transmit chain transmits the amplified pulsed sinusoidal signal to the environment through the transmit antenna. The clutter and targets in the environment reflect the signal to the radar receive antenna. In the receive chain, the received signal undergoes stages of amplification and down-conversion to generate an IF signal. The IF signal gets converted to a baseband signal in the data processing chain. The baseband signal undergoes further data processing stages to enhance the target's signal-to-noise ratio.

Figure 2 schematically depicts a typical PLL including a reference oscillator, phase detector, filter, VCO, and divider, according to an exemplary embodiment. The phase detector compares the output of the reference oscillator with the output of the VCO. The output of the phase detector is used to optimise the phase of the VCO until the VCO is locked with the reference oscillator. The divider is used to divide the VCO output frequency, and the filter is used to filter out the noise.

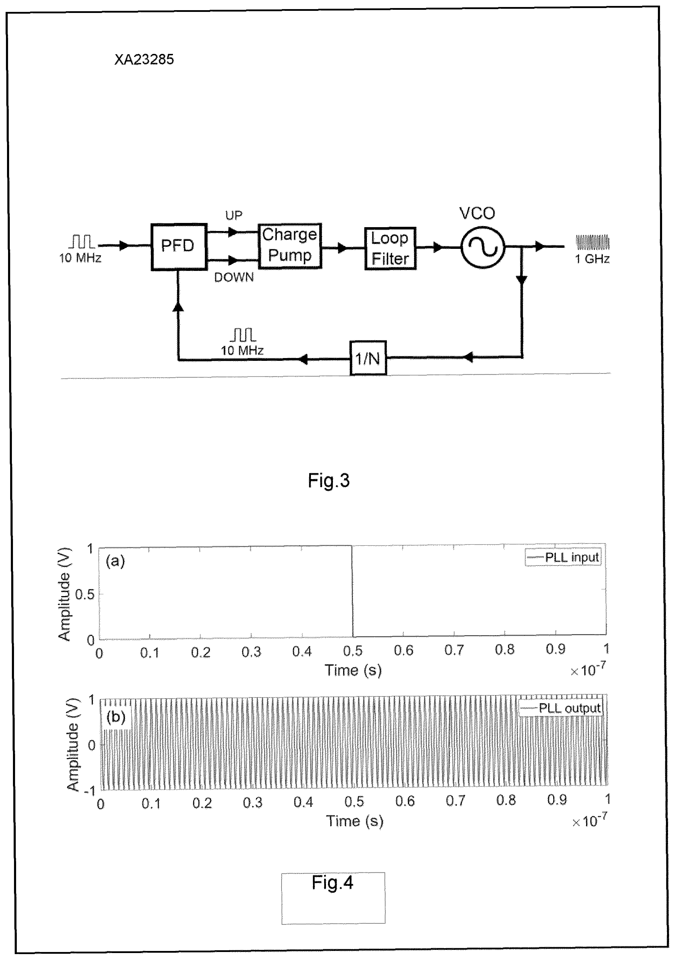

Figure 3 schematically depicts a charge pump integer N PLL to generate a phase-locked 1 GHz signal using a 10 MHz reference signal. The output of the VCO is divided by a factor of 100 and compared with the reference oscillator at the PFD. The UP and DOWN signals at the output of the PFD drive the charge pump. The charge pump output is transferred through a loop filter to the control input of the VCO. The PLL finally gets locked when both the reference signal and the divided signal are synchronised with each other.

Figure 4 shows a time domain representation of (a) 10 MHz pulsed signal at the input of the PLL, (b) 1 GHz phase-locked VCO signal at the output of the PLL.

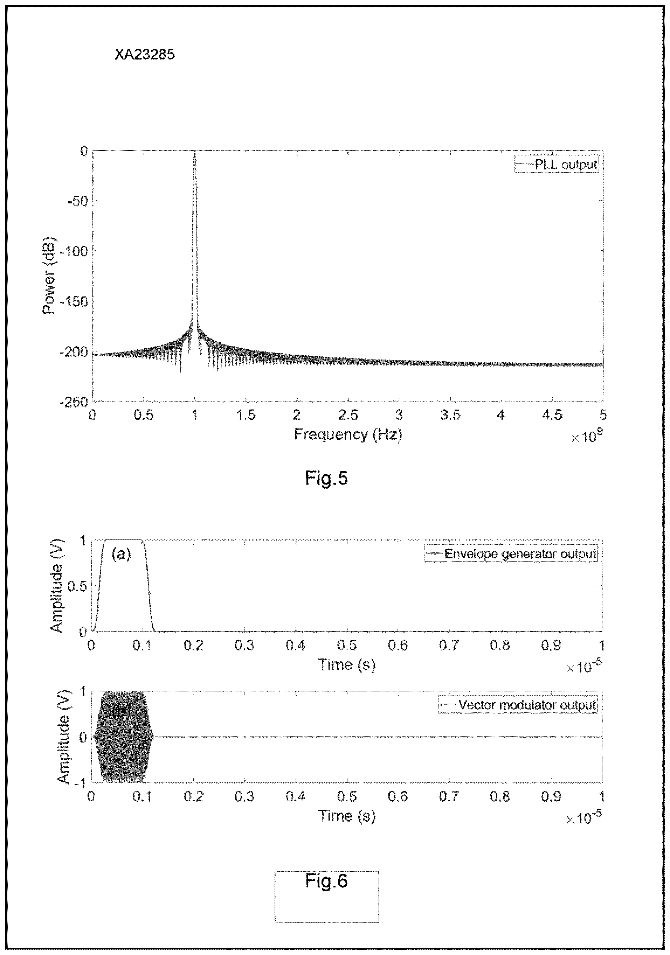

Figure 5 shows a power spectrum of the 1 GHz phase-locked VCO signal at the output of the PLL.

Figure 6 shows a time domain representation of the signals at the output of different blocks in the transmit chain. The representation only shows a partial section (10 s) from a full PRI. (a) Envelope generator output showing an amplitude envelope of around 1 s, (b) Vector modulator output showing the continuous sinusoidal signal inside the amplitude envelope. The transmit frequency at the L-band makes it difficult to resolve the sinusoidal signal in the representation. The particular shape of the vector modulator output is the artefact of the sampling rate of the envelope generator.

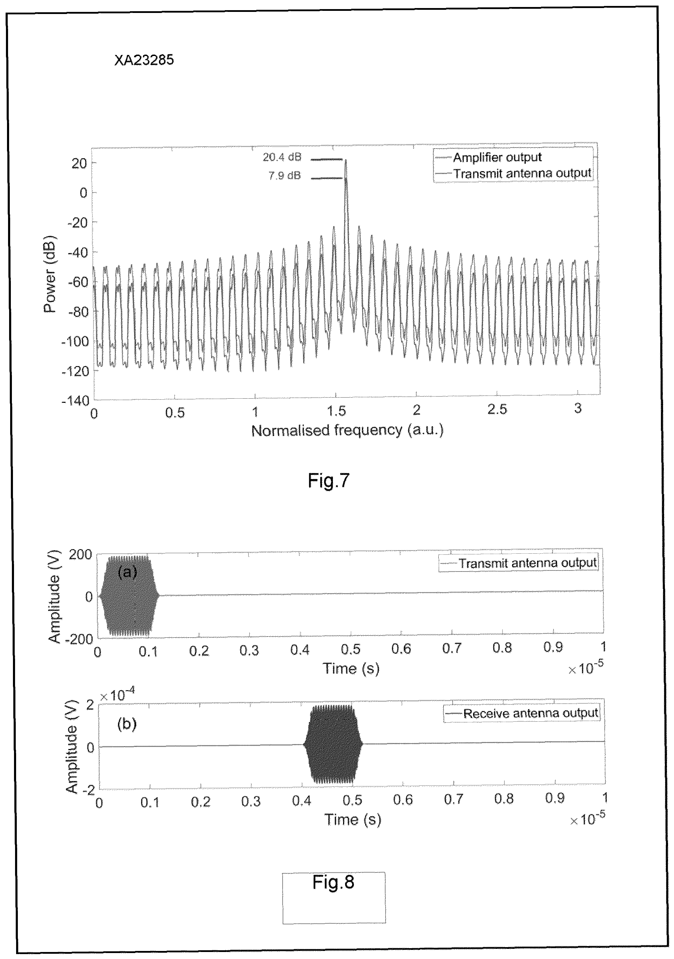

Figure 7 shows a power spectrum of the signal at the output of the amplifier and the transmit antenna. The power spectrum at the output of the amplifier is peaked at 7.9 dB, equivalent to a signal power of 33 dB. The power spectrum at the output of the transmit antenna is peaked at 20.4 dB, equivalent to a signal power of 45.5 dB. The transmit antenna gain is equivalent to 12.5 dB. The sidelobes in the power spectrum are the artefact of the sampling rate of the envelope generator.

Figure 8 shows a time domain representation of the signals at the antenna outputs showing a time delay of 4 s equivalent to a range of 600 m. The representation only shows a partial section (10 s) from a full PRI. (a) The signal at the output of the transmit antenna, and (b) the signal at the output of the receive antenna.

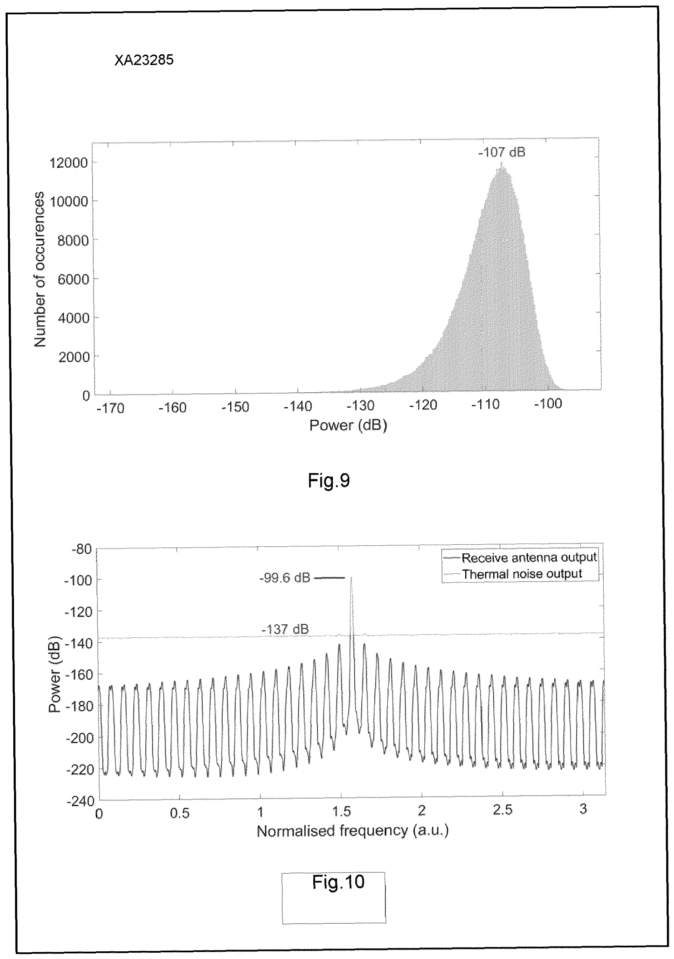

Figure 9 shows a histogram of the thermal noise at the output of the thermal noise block in the simulation. The histogram shows Gaussian noise distribution peaked at -107 dB for the bandwidth and temperature of 5 GHz and 290 K, respectively.

Figure 10 shows a power spectrum of the signal at the output of the receive antenna and thermal noise block. The power spectrum at the output of the receive antenna is peaked at -99.6 dB, equivalent to a received signal power of -74.5 dB. The power spectrum at the output of the thermal noise block shows the uniform thermal noise floor at -137 dB. Since the spectrum has an RBW of 5 MHz, the - 137 dB is equivalent to the expected thermal noise power of -107 dB.

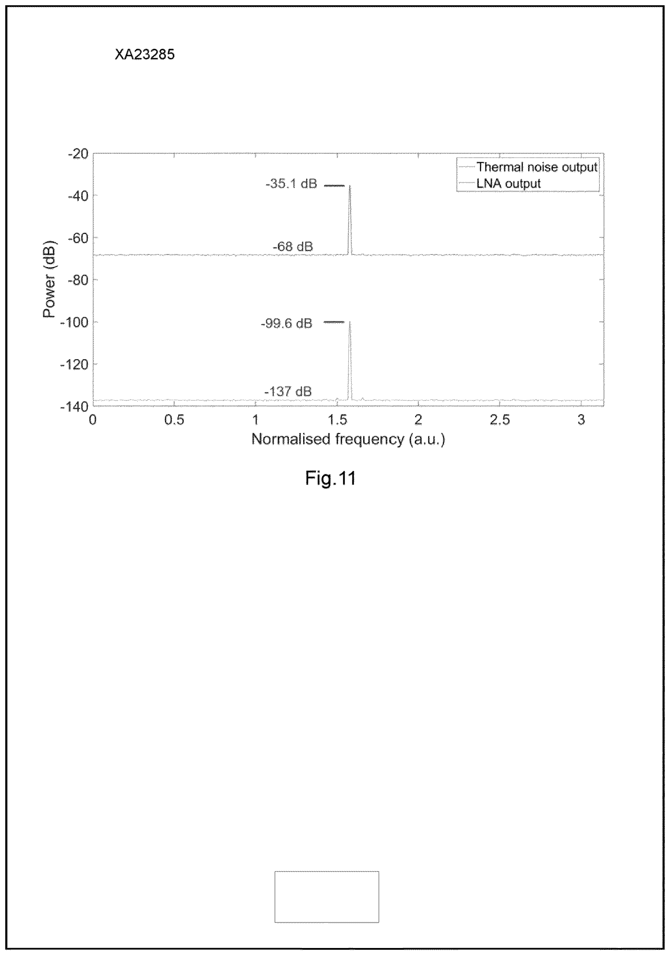

Figure 11 shows a power spectrum at the output of the thermal noise block and the LNA. The power spectrum at the output of the LNA is amplified to -35.1 dB, equivalent to a peak power of -10 dB. The noise floor is amplified to -68 dB, equivalent to the noise power of -38 dB. The SNR at the output of the LNA is less than the SNR at the output of the thermal noise block by a factor of 4.5 dB (equivalent to the LNA NF).

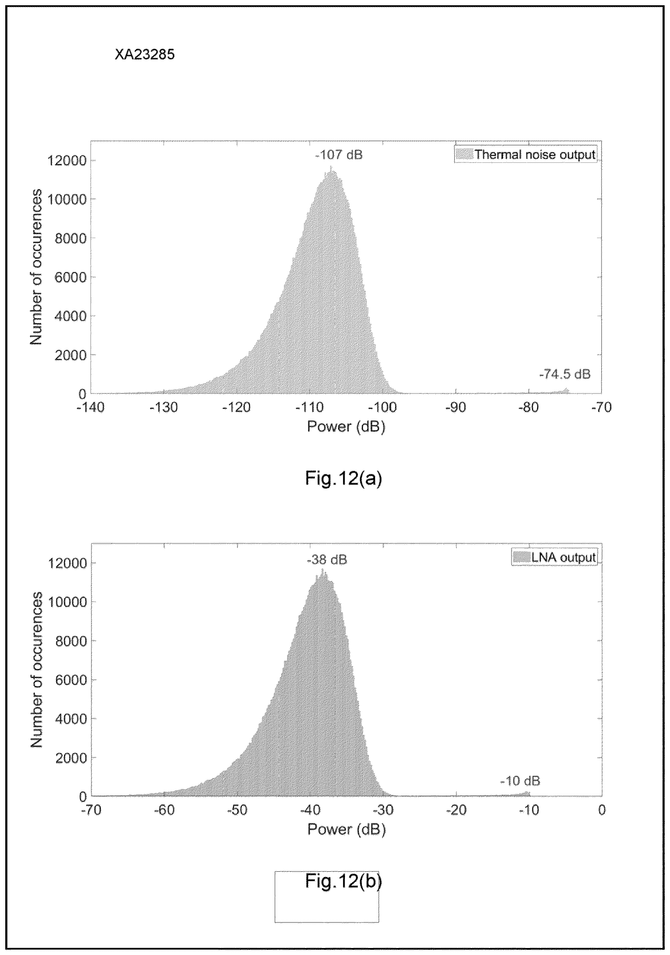

Figure 12 shows histograms at the output of the thermal noise block and the LNA showing the peak signal and noise power values. (a) Histogram at the output of the thermal noise block showing the signal power and noise power at - 74.5 dB and -107 dB, respectively. (b) Histogram at the output of the LNA showing the signal power and noise power at -10 dB and -38 dB, respectively.

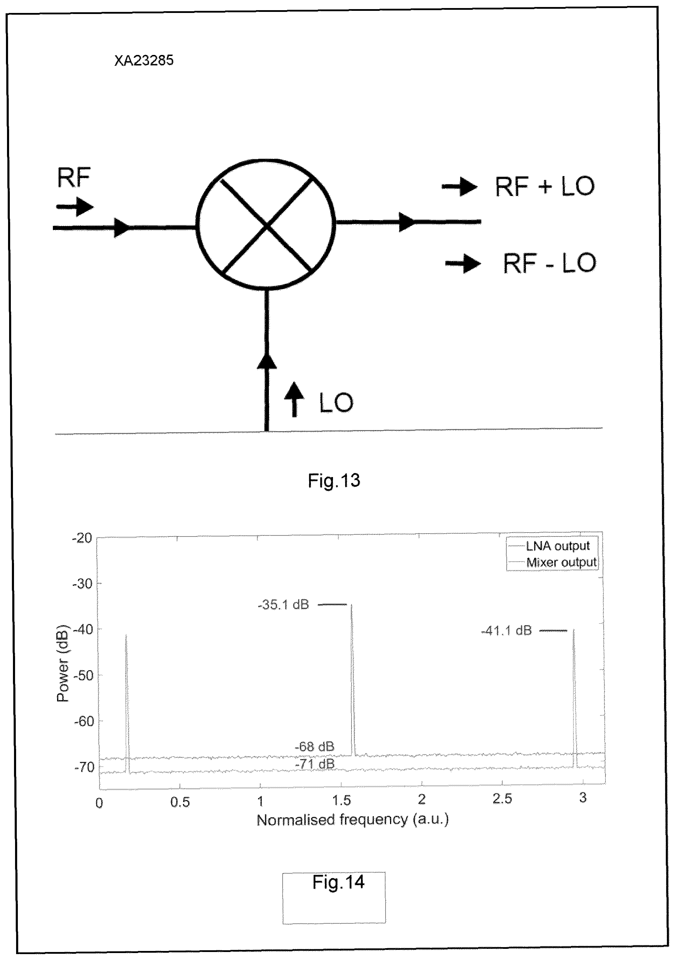

Figure 13 shows a schematic of a typical mixer including RF and LO inputs and an output. The output includes two frequencies, the sum of the two input frequencies, and the difference between the two input frequencies.

Figure 14 shows a power spectrum of the signal at the output of the LNA and mixer. The signal peak at the output of the mixer is reduced by 6 dB compared to the peak at the output of the LNA. The noise power at the output of the mixer is reduced by 3 dB compared to the noise power at the output of the LNA. The reduction in the signal and noise power values is as expected.

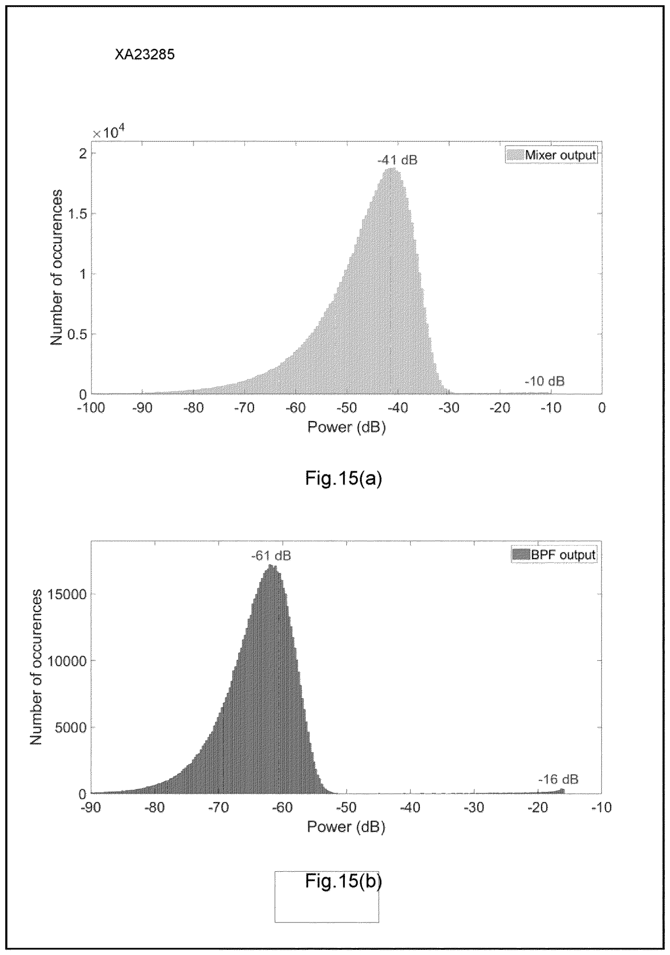

Figure 15 shows histograms at the output of the mixer and BPF showing the peak signal and noise power values. (a) Histogram at the output of the mixer showing the signal power and noise power at -10 dB and -41 dB, respectively. (b) Histogram at the output of the BPF showing the signal power and noise power at -16 dB and -61 dB, respectively.

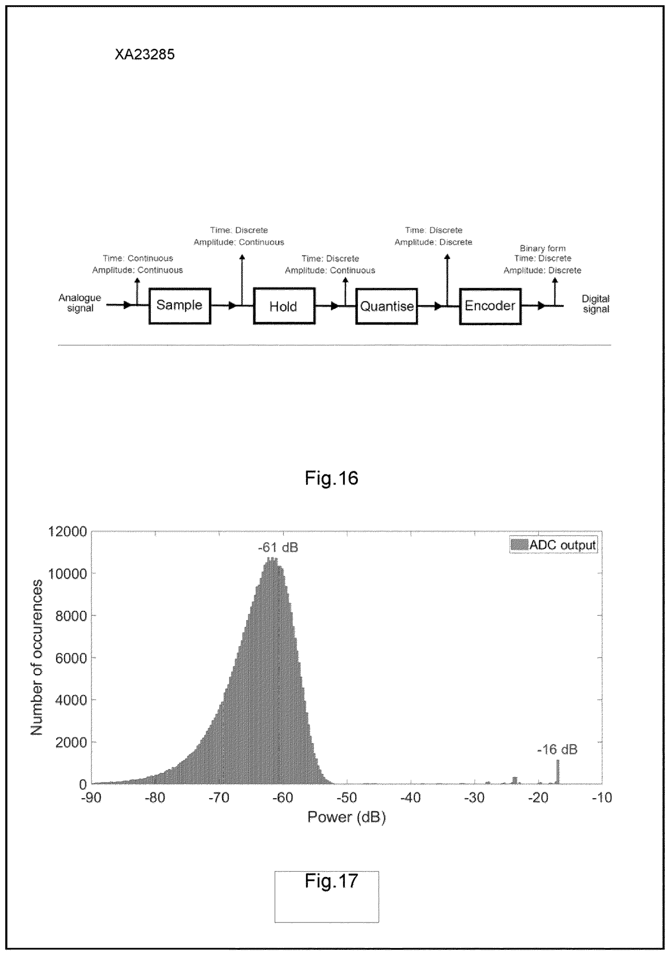

Figure 16 schematically depicts a typical ADC including sample block, hold block, quantise block, and an encoder block. The input to the ADC is sampled at a required frequency in the sample block and is stored in the hold block until the next sample. The signal is quantised using the quantise block. The digital signal at the output of the quantise block is converted to the binary form in the binary block.

Figure 17 shows a histogram at the output of the ADC showing the signal power and noise power at -16 dB and -61 dB, respectively.

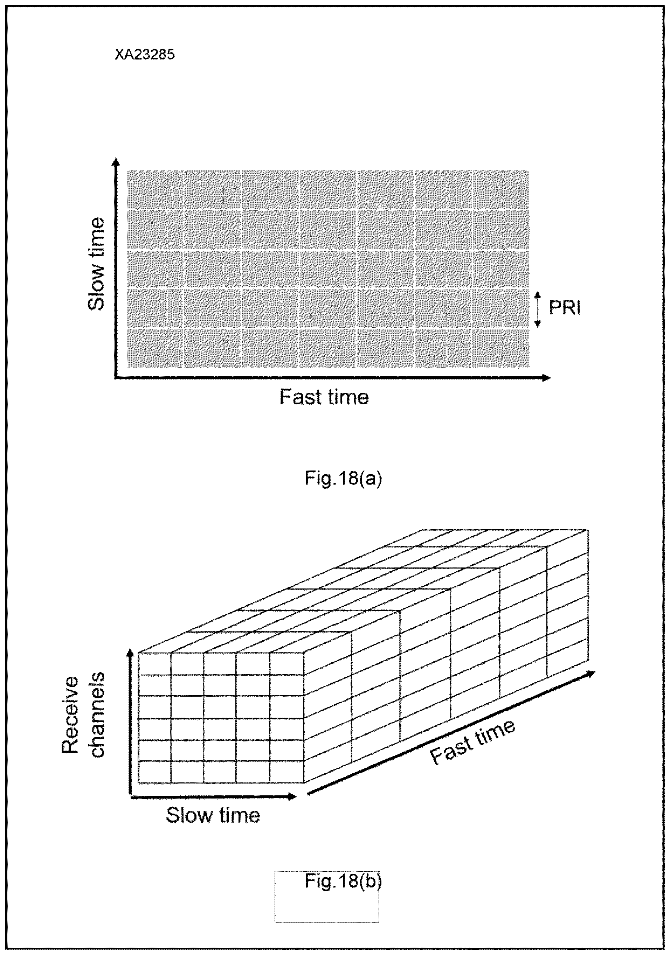

Figure 18 schematically depicts a data matrix and data cube in the data processing chain of a radar system. (a) A data matrix including a single PRI in the fast time axis and stacks of PRIs in the slow time axis. (b) A data cube including data matrices from each receive channel stacked over each other.

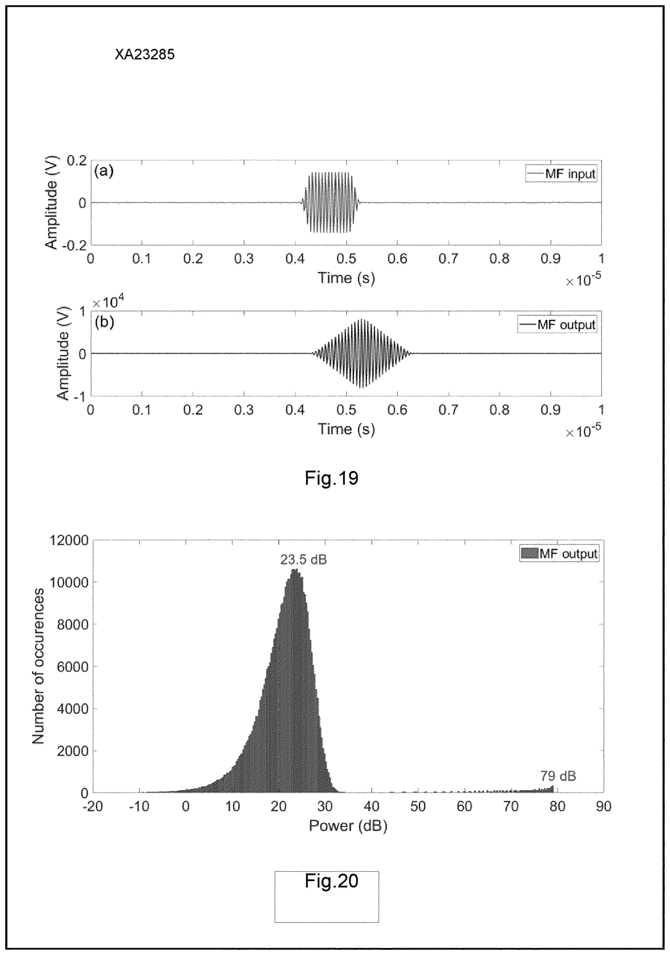

Figure 19 shows a time domain representation of (a) signal at the input of the matched filter, (b) signal at the output of the matched filter.

Figure 20 shows a histogram at the output of the matched filter showing the signal power and noise power at 79 dB and 24.5 dB, respectively.

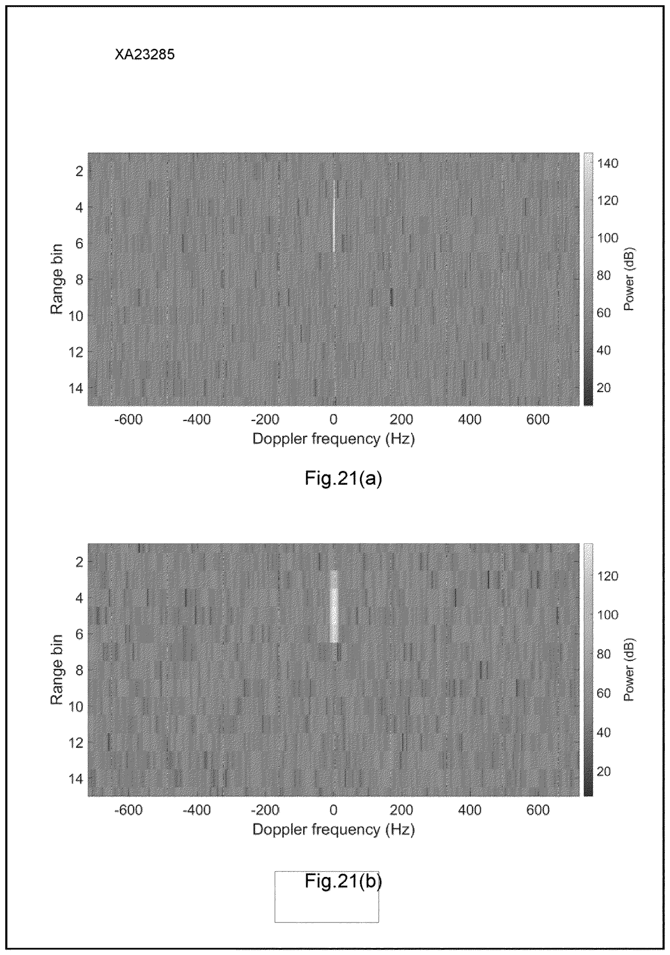

Figure 21 shows simulated range-Doppler plots of a stationary test target at 600 m including 15 range bins and central Doppler bins equivalent to 1400 Hz. (a) Range-Doppler plot without Blackman-Harris windowing showing a target peak power of 145 dB and average noise power of 56.5 dB, equivalent to an SNR of 88.5 dB. (b) Simulated range-Doppler plots of a stationary test target at 600 m including 15 range bins and central Doppler bins equivalent to 1400 Hz.

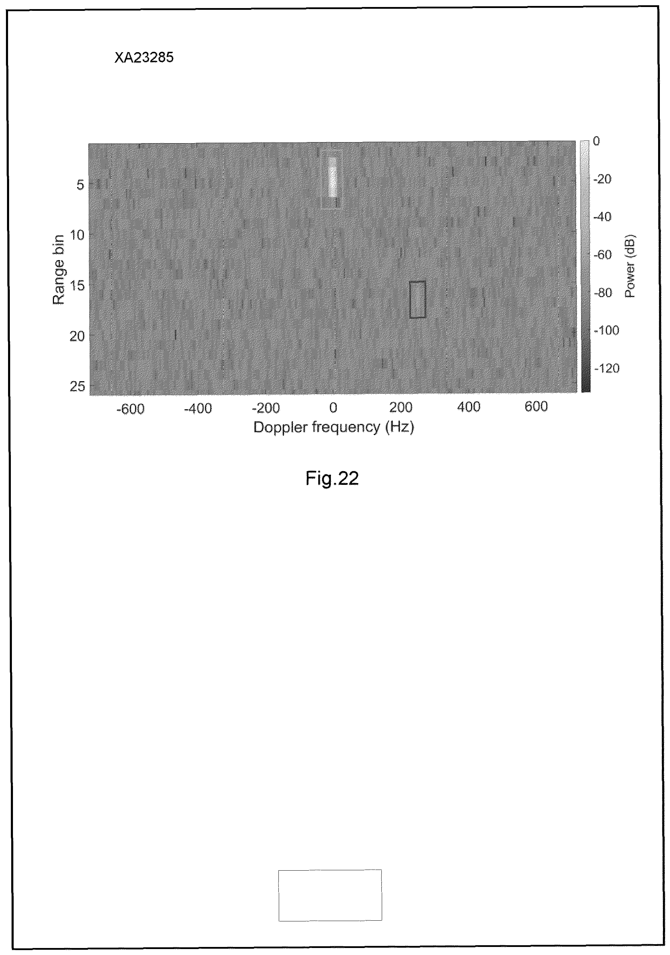

Figure 22 shows a simulated range-Doppler plot with range bin in the vertical axis and Doppler frequency in the horizontal axis. The spectrum is shown for -700 to +700 Hz. The single stationary clutter and the single Doppler target are highlighted within a green and red box, respectively. The range-Doppler plot is normalised to the clutter.

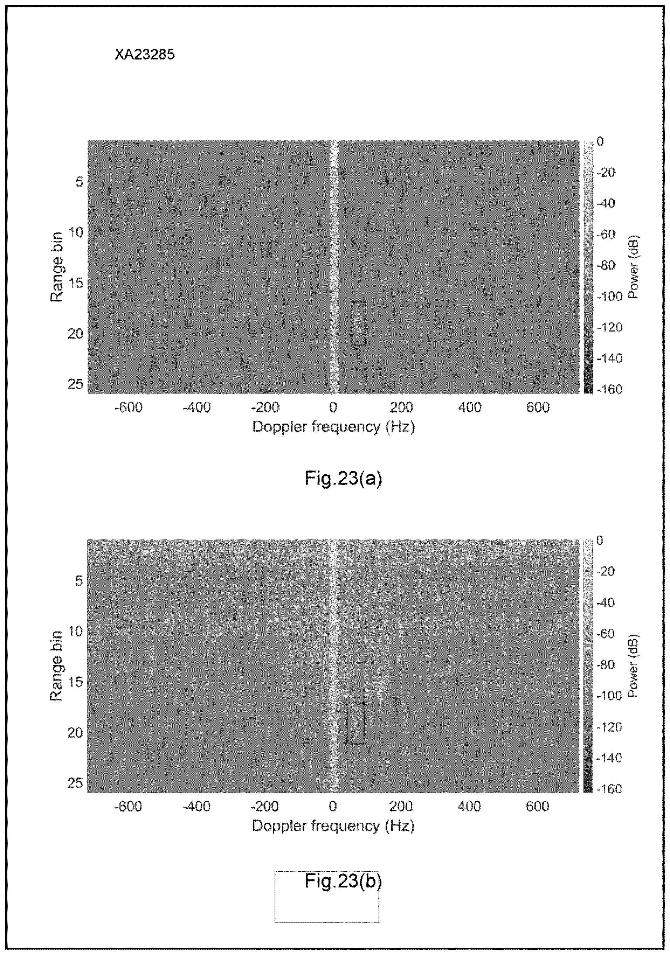

Figure 23 shows comparison of the simulated range-Doppler plot with the real range-Doppler plot. Both the range-Doppler plots are normalised to the strongest clutter. The target is highlighted in the red box. The target is present across both the plots in the same range and Doppler bin. (a) Simulated range-Doppler plot without the oscillator phase noise. The plot includes the stationary clutter and a single simulated target in the uniform thermal noise floor. (b) Real range-Doppler plot from the staring radar trial at an airfield. The phase noise floor is seen emerging from the thermal noise floor for range bins with higher clutter. The plot also includes other unwanted targets as seen by the radar.

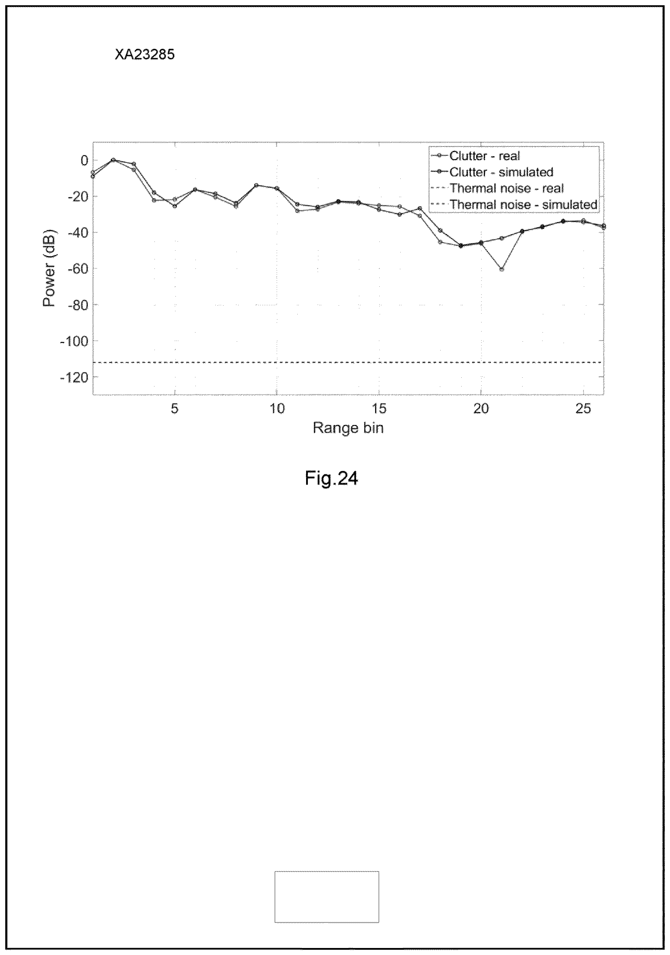

Figure 24 shows a comparison graph shows the clutter power and the thermal noise floor for every range bin. The comparison graph includes data from the real and simulated range-Doppler plots. The clutter power for both the simulation and real data overlap to a good extent. The thermal noise floor in simulation fully overlaps with the real data and hence is not differentiable.

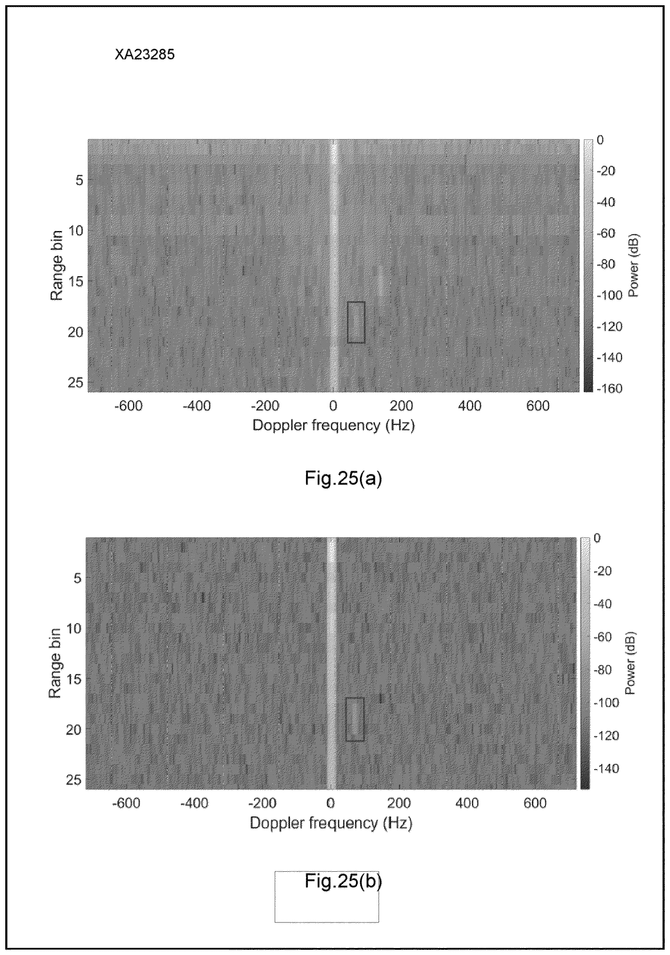

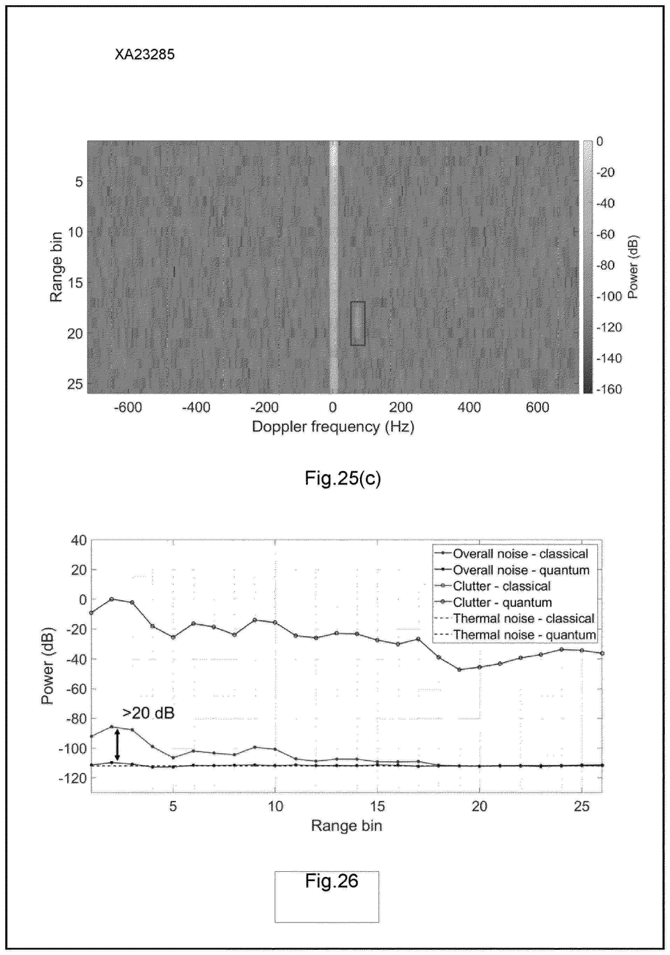

Figure 25(a) shows a simulated range-Doppler plot with classical oscillator phase noise. Figure 25(b) shows a real range-Doppler plot from a staring radar trial with classical oscillator phase noise. The range-Doppler plot also consists of other unwanted targets as seen by the radar. Figure 25(c) shows a comparison of the simulated and real range-Doppler plot with classical oscillator phase noise. The phase noise floor can be seen coming out of the thermal noise floor for range bins with higher clutter power. The target of interest is highlighted in the red box.

Figure 26 shows a comparison graph showing the peak clutter power, overall noise floor, and thermal noise floor for each range bin for both the simulated and real range-Doppler plot with classical oscillator phase noise. The overall noise floor for both the simulation and real data overlap to a good extent. The overall noise floor for range bins close to the radar is increased by nearly 25 dB above the thermal noise floor. The thermal noise floor in simulation fully overlaps with the real data and hence is not differentiable.

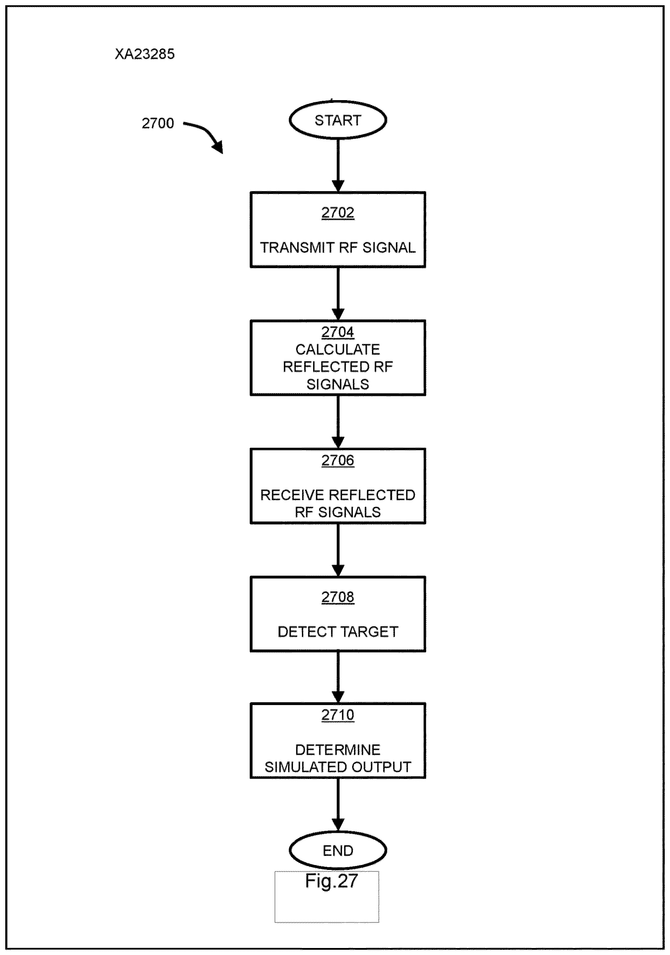

Figure 27 schematically depicts a method according to an exemplary embodiment.

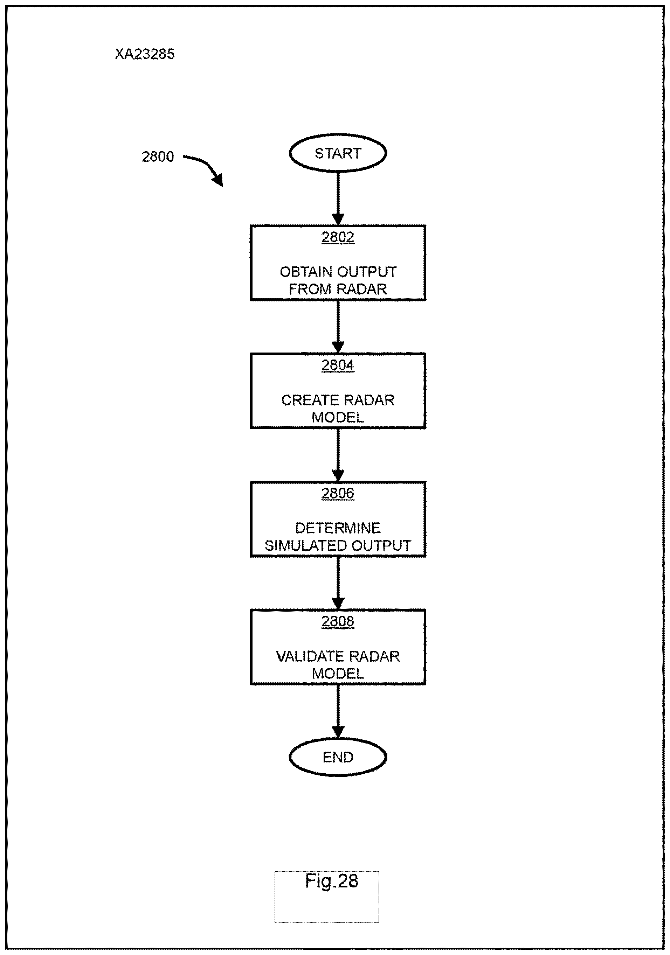

Figure 28 schematically depicts a method according to an exemplary embodiment.

DETAILED DESCRIPTION OF THE DRAWINGS

There are many radar architectures in the current world, and radar architecture depends on the application of the radar. Some common radar architectures include frequency-modulated continuous wave radar, pulse Doppler radar, and pulse compression radar. Any generic radar includes a transmit chain, a receive chain, and a data processing chain. A good radar model is a model that can simulate the building blocks in the transmit chain, receive chain and data processing chain, along with the target and clutter model of the environment. The radar model developed and discussed herein is based on the L-band staring pulsed Doppler radar at the University of Birmingham with a reasonable number of simplifications and is focused on modelling the behaviour of the hardware building blocks.
There are several platforms where radar can be modelled, including MATLAB and LabVIEW. The radar model discussed herein was developed from scratch in a bottom-up approach in MATLAB and the graphical interface of MATLAB, known as Simulink. Most of the building blocks in the radar were modelled in Simulink to develop a user-friendly radar model with the power to optimise every parameter based on the requirements. The front end of the simulated whole radar model is given in Figure 1. The radar model can be divided into four major sections as follows:

- Transmit chain

- Environment

- Receive chain

- Data processing chain

The components within the transmit chain, the environment, and the receive chain were modelled as separate system-level building blocks in Simulink. Each radar building block includes further sub-blocks to properly represent the functioning of the radar components in the model. The Simulink blocks representing the radar components were connected to perform simulations on the full radar model. Test probes were placed to assess the signal at the input and output of every building block in the simulation, both in the time and frequency domain. The data at the output of the last block of the receive chain was taken to the MATLAB workspace. The data processing chain was realised in MATLAB using separate MATLAB codes.

The transmit chain of the front end of the radar model included a transmit phase lock loop (PLL) for the generation of the transmit RF signal and an envelope generator to provide the amplitude envelope. The continuous RF signal produced at the output of the transmit PLL was converted to a pulsed, amplitude-modulated RF signal with the help of the vector modulator. The RF signal was then amplified using the amplifier and transmitted to the environment using the transmit antenna.

The environment included targets and clutter models to reflect the transmitted RF signal towards the receive antenna. In the receive chain, the reflected signal from the environment was collected by the receive antenna. The thermal noise block after the receive antenna added Gaussian thermal noise to the simulation. The LNA amplified the received signal at the output of the thermal noise block. The combination of the receive PLL block and the mixer block down-converted the received RF signal to a first intermediate frequency (IF1) signal. The IF1 signal was filtered using BPF to remove all the unwanted frequencies. The ADC placed at the output of the BPF down-converted the IF1 signal to a second intermediate frequency (IF2). Since the signal was already in the digital domain, the ADC was only used for frequency down-conversion.

A number of data processing methods were performed to the signal at the output of the ADC in the data processing chain. The data processing chain included Hilbert transform and matched filtering, windowing, FFT, and range-Doppler plot generation. The matched filtering was used to improve the SNR in the presence of additive noise. In the radar domain, matched filtering is often referred to as pulse compression. The FFT was used to generate the range-Doppler plot from the time domain signal and to perform the pulse integration to improve the SNR. The spectral leakage due to the Fourier transform was reduced through windowing.

## 2 Transmit chain

The transmit chain of the simulated whole radar model included components to perform signal generation, signal modulation, signal amplification and signal transmission. One of the significant aspects of the radar transmit chain is the generation of the RF transmit frequency. As discussed herein, the transmit frequency is either directly generated or synthesised using the process of frequency up-conversion. The very early method for direct synthesis of the RF signal used magnetrons. Recently, direct digital synthesis (DDS), has been used to generate signals directly at the required RF frequency. The typical method to synthesise the RF signal using the frequency up-conversion includes mixers. Another method for frequency up-conversion is using PLLs. The RF signal was generated using a transmit PLL in the whole radar model. The Simulink simulation discussed herein also includes a general stand-alone PLL model to verify the PLL's working principle. In the whole radar model, due to modelling limitations in integrating the stand-alone model of the PLL, a simplified version of transmit PLL to generate the signal directly at the RF frequency was modelled.

Most of the radar signals undergo some form of waveform modulation. The waveform modulation can be of different types, including amplitude modulation, frequency modulation, and phase modulation, as discussed herein. The whole radar model included an amplitude modulation to generate a pulsed radar signal. The amplitude envelope for the amplitude modulation in the whole radar model was generated by an envelope generator block, as shown in Figure 1. The amplitude modulation is generally added to the RF signal with the help of mixers. The mixers are also used in radars for frequency up-conversion and frequency down-conversion. In the radar model, the vector modulator performs the function of the mixer. The vector modulator integrated the amplitude modulation into the RF signal. In most radars, the RF signal generated needs to be amplified to a high power before transmission to the environment. The power required for transmission and amplification depends on the radar application. The whole radar model simulated a simple amplifier design with a constant amplifier gain. The transmit antenna design can follow different architectures depending on the application. The transmit antenna was modelled as a single transmit antenna with a constant antenna gain in the whole radar model.

## 2.1 Transmit PLL

The transmit PLL generates the sinusoidal RF signal in the transmit chain of the radar model implemented in the simulation. This subsection discusses the fundamentals of PLL, the operation of a PLL in the simulation, and the transmit PLL design in the simulation.

2.1.1 Fundamentals of PLL

A PLL is an electronic circuit that uses a voltage or voltage-driven oscillator that continuously modifies its frequency to match an input signal. PLLs produce, stabilise, modulate, demodulate, filter, or recover a signal in' noisy' communication channels. The PLL plays an important aspect in most modern-day electronic devices, especially RF devices. In radars, the PLL is used to generate a stable RF signal at the radar transmit frequency using a highly stable reference oscillator.

The block diagram of a typical PLL is given in Figure 2. The major components in a PLL include a reference oscillator, a voltage-controlled oscillator (VCO), a phase detector, a filter, and in some cases, a divider. The PLL works on the principle of tuning the phase and the frequency of the VCO with the help of the reference oscillator. A control input within the VCO adjusts the VCO frequency, and the phase detector compares the phase of the VCO to the reference oscillator. When the phase of the VCO is synchronised with the reference oscillator, the condition is known as phase-locked, and hence the name phase lock loop. The VCO can also be locked to a reference oscillator at a different reference frequency with the help of a divider placed in front of the phase detector, as shown in Figure 2. The divider can also be placed after the reference oscillator when a fractional relation is required between the reference oscillator and the VCO frequencies.

There are different kinds of phase detectors. The mixer phase detectors work on the principle of mixing the two input signals. The mixer performs the multiplication of two inputs, and one of the outputs of a mixer phase detector will be the sine of the phase difference between the two inputs. The mixer phase detector only detects the difference in the phase of the two inputs and is only valid for the same frequencies or frequencies very close to each other.

The phase frequency detector (PFD) is the most popular phase detector. The PFD can work even in cases where the frequency of the two input signals to the phase detectors is different. The PFD works on the principle of zero transitions of the input signals to track the difference in the phase and frequency. The outputs of the PFD include a UP signal and a DOWN signal. The UP and DOWN signal indicates the direction of the frequency change required to lock the PLL. Since a voltage signal controls the VCO, the UP and DOWN signals at the output of the PFD need to be converted into voltage signals. One of the standard conversion methods of the UP and DOWN signal is using the charge pumps. The current sources in the charge pump can be controlled by the UP and DOWN outputs from the PFD. The charge pump current is sunk to the output when the UP signal is active, and the charge pump current is drawn from the output when the DOWN signal is active. The capacitor at the output of the charge pump transfers the variation in current to the variation in voltage. The variation in voltage is fed to the control input of the VCO.

The filter in the PLL is primarily used to control the dynamics of the loop and hence is also known as a loop filter. The filter is also used to low-pass filter the noise and unwanted products at the output of the phase detector. The filter is placed before the VCO, and the output of the filter is fed to the control input of the VCO.

2.1.2 Operation of a PLL in simulation

A general example of a charge pump integer N PLL operation to generate an RF signal at 1 GHz using a 10 MHz stable reference oscillator is given in the Figure 3. In the PLL simulation, the 1 GHz output of the VCO was down-converted to 10 MHz with the help of the divider with N equal to 100. The reference signal and the divider signal was compared in the PFD, and the PFD generated an error signal depending on the phase difference between the two input signal. The error signal drove the charge pump, and the charge pump output was provided to the control input of the VCO. The PLL output signal at 1 GHz finally gets locked to the 10 MHz reference signal when both the reference signal and the divided signal are phase locked. The 10 MHz pulsed reference signal to the input of the PLL and the 1 GHz phase-locked sinusoidal signal at the output of the PLL are given in Figure 4. The spectrum of the phase-locked VCO signal at the output of the PLL given in Figure 5 shows a peak at 1 GHz, confirming the operation of the PLL in the simulation platform.

2.1.3 Transmit PLL in simulation

The ideal case scenario is to integrate a fully functional PLL model as described in the section 2.1.2 within the whole radar model simulation. Due to design and timing considerations, it was not possible to integrate the fully functional PLL into the radar model. As an alternate approach, the transmit PLL simulated in the model was based on the RF blockset in the Simulink and was modelled as a direct digital synthesiser to generate the signal directly at the RF frequency. The transmit PLL also has the option to add phase noise to the generated signal. Phase noise is very crucial in the characterisation and the performance of the radar, and the effects of phase noise in the radar system are discussed in detail herein. The transmit PLL can provide amplitude and frequency to any user-specified value. The block also has the option to provide the amplitude to both the in-phase and quadrature components of the signal. Apart from generating signals with a specific amplitude, the signals can also be specified in terms of current and power. The output frequency of the transmit PLL was set to the transmit frequency of the L-band staring radar. The amplitude of the signal generated was set to 1 V. The simplified equation of the mathematical model of the signal at the output of the transmit PLL is given by,

$$S_{PLL}(t) = A_{PLL}\cos[2\pi f_T t + \theta], \qquad (1)$$

where $S_{PLL}(t)$ represents the sinusoidal signal at the output of the transmit PLL, $A_{PLL}$ and $\theta$ represent the sinusoidal signal's amplitude and phase, respectively, and $f_T$ represents the transmit frequency.

*2.2 Envelope generator and vector modulator*

Signal modulation is one of the important aspects of the transmit chain of the radar. Amplitude and frequency modulation are the two most common signal modulations used in radars. The amplitude modulation provides an amplitude envelope over the generated RF signal, and the envelope can be of different shapes based on the radar requirements. The most common amplitude modulations are rectangular envelopes. In linear frequency modulation, the transmit signal frequency is modulated in a linear fashion. Linear frequency modulation is used to achieve high range resolution and large detection range simultaneously using the increased bandwidth of the transmit signal. The enveloper generator is one of the methods to generate the modulation required for the radar transmit signal. The vector modulator is fundamentally a mixer to add the baseband modulation to the RF signal. The vector modulator architecture is similar to a general mixer architecture.

2.2.1 Envelope generator in simulation

In the whole radar model, the envelope generator was used to provide the required amplitude envelope for the signal generated by the transmit PLL. The envelope generator can generate any user-defined amplitude envelope. The envelope generator also has the potential to include further sub-blocks to enable phase modulation and frequency modulation. In the simulation, the envelope generator generated a shaped envelope with a pulse width of about 1 s and a PRI of about 136 s. The envelope generator was realised as a block that can provide amplitude values at a user-specified sampling rate. The amplitude values were loaded into MATLAB as mat files and were read by Simulink at the specified sampling rate. The amplitude envelope at the output of the envelope generator is given in Figure 6(a).

2.2.2 Vector modulator in simulation

In the whole radar model, the vector modulator mixes the continuous sinusoidal signal at the output of the transmit PLL with the amplitude envelope at the output of the envelope generator. The vector modulator was realised in the simulation using an RF blockset mixer. The mathematical model of the signal at the output of the vector modulator is given by:

$$S_V(t) = A_V\cos[2\pi f_T t + \theta], \qquad (2)$$

where $S_v(t)$ represents the signal at the output of the vector modulator, $A_v$, $f_T$, and $\theta$ represents the amplitude, frequency, and phase of signal respectively. Even though the signal at the output of the vector modulator was a pulsed signal, for simplicity, the time dependency of the pulse is not explicitly mentioned in the equation 2. Hence the equation 2 is a simplified mathematical signal model. The pulsed RF signal at the output of the vector modulator is shown in Figure 6(b). Figure 6(b) clearly shows the amplitude envelope over the sinusoidal RF signal. The particular shape of the vector modulator output is the artefact of the envelope generator's sampling rate.

*2.3 Amplifier*

An RF amplifier is an electronic amplifier used in most communication systems to amplify the input signal to the required output signal. In radars, the RF amplifiers are used to convert the low-power RF signal generated by the transmitters to high power RF transmit signal. The RF amplifiers are generally located before the radar transmit antenna and drive the transmit antenna. The design parameters of an RF amplifier include gain, power output, bandwidth, input and output impedance matching, and linearity.

The gain of the RF amplifier is defined as the ratio of the output power to the input signal power. The bandwidth defines the operational signal bandwidth of the amplifier and, ideally, would need different amplifiers depending on the signal frequency. Impedance is defined as a measure of opposition to the electrical flow. Impedance is a complex-valued quantity with resistance as the real part and reactance as the imaginary part. The impedance matching is equalising the input and output impedance to maximise the signal power transfer by minimising the signal reflections. The linearity is described as a circuit's behaviour; the output signal strength variation is directly proportional to the input signal strength variation. The output-to-input signal power ratio remains the same for a linear amplifier, independent of the input signal power.

2.3.1 Amplifier in simulation

In the whole radar model, a simplified signal amplifier was used to amplify the input signal to any user-defined value. The amplifier in the simulation has the option to perform both linear and non-linear amplification. The amplifier in the simulation was set to linear amplification. The amplification factor in dB can also be provided to the amplifier. From the radar power budget, the signal power's expected value at the amplifier's output is 33 dB. The power spectrum outputs the RMS value of signals. For an ideal rectangular pulse with a width of 1 s and a PRI of 136 s, the RMS peak will be reduced by a factor of 21.3 dB, resulting in a power spectrum peaked at 11.7 dB (instead of 33 dB). Since the amplitude envelope in the simulation is not a perfect rectangle, the peak at the spectrum will be reduced by an additional 3.8 dB, resulting in a total reduction of 25.1 dB. The power spectrum of the signal at the output of the amplifier is given in Figure 7. In Figure 7, we can see that the signal's peak power at the amplifier's output is 7.9 dB, equivalent to 33 dB of transmit power.

*2.4 Transmit antenna*

Antennas are widely used in all wireless systems. The behaviour of an antenna is dependent on the components within the antenna, and the antenna design is dependent on the application. In radars, transmit antenna is used to broadcast the RF transmit signal to the environment. The important parameters of an antenna are the radiation pattern, antenna gain, and directivity.

The radiation pattern of an antenna is a description of the angular dependence of its emissions, which are a result of its three-dimensional geometry. In the three-dimensional coordinate system, the horizontal plane (XY) is defined as the azimuth plane, and the vertical plane (YZ) is the elevation plane. An azimuth angle is defined as the horizontal axis angle from the antenna boresight direction. An elevation angle is defined as the angle above the horizon in the vertical direction. Based on the radiation pattern, the antennas can be divided into an isotropic and directional antenna. An isotropic antenna is a theoretical antenna pattern where radiation power is equal in all directions of azimuth and elevation. In a directional antenna, the energy is dominated in one or more directions. Antenna gain is defined as the ratio of power transmitted in the main direction of a directional antenna to the power in an isotropic antenna. The main direction of a directional antenna is called radar boresight. The directivity of an antenna is defined as the maximum signal power radiated in a given direction divided by the average power in all directions.

2.4.1 Transmit antenna in simulation

The transmit antenna was designed as a simplified antenna with a constant antenna gain in the whole radar model. There are antenna designs in Simulink that can include the parameters like directivity. The constraint in the total simulation time for the whole radar simulation was considered while simulating the simplified antenna model. Further modifications can be incorporated into the antenna design depending on the application. The antenna gain in the simulation was realised using an amplifier as described in the section 2.3.1. The simplified mathematical model of the transmitted signal is given by,

$$S_T(t) = A_T \cos[2\pi f_T t + \theta], \qquad (3)$$

where $S_T(t)$ represents the transmitted signal, $A_T$ represents the amplitude of the transmitted signal. The power spectrum of the signal at the output of the transmit antenna is given in Figure 7. The transmit antenna is expected to amplify the signal by 12.5 dB at transmission. The value of antenna gain was selected based on the system parameters of the L-band staring radar. From Figure 7, we can see the signal at the output of the transmit antenna peaked at 20.4 dB, equivalent to a signal power of 45.5 at the output of the transmit antenna. The transmit antenna gain of 12.5 dB is visible in Figure 7. In the simulation, the output of the transmit antenna was connected to the blocks in the environment.

## 3 Environment

The environment of a radar includes both targets and clutter. The targets are objects of interest in the environment and can be either stationary or moving. All the moving targets have a Doppler frequency associated with the target, and the Doppler frequency is used to measure the velocity of the target. The radar targets include drones, aircraft, ships, cars, and birds. The clutters are generally stationary objects and can include of buildings, trees, land, sea and other geographical features in the field of view. The weather is also classified as clutter. The electromagnetic signal interacts with the atmosphere, the clutter and targets, and the different kinds of interaction are discussed herein. The interaction of the electromagnetic signal with the environment is accommodated in the radar range equation as discussed herein.

### 3.1 Target and clutter in simulation

In the whole radar model, a simple representation of the magnitude response of both the targets and the clutter was simulated. Each of the sub-blocks within the environment, as shown in Figure 1, represents the magnitude response of different objects in the environment, and the objects can be either targets or clutter. The targets and clutter are realised as point scatterers in the whole radar model. The output of the transmit antenna block was connected to the input of the magnitude response block. Each magnitude response block was designed based on the radar range equation. The range, velocity and the RCS of each object can be defined in the magnitude response block. The environment can ideally represent any number of objects with varying ranges, velocities and RCS values as point scatterers. Since the antenna's directivity is not included in the simulation, the position of objects corresponds to ranges in the radar boresight. The simulation could include additional algorithms to place objects at a specific angle in the azimuth and elevation. The output of the magnitude response blocks was connected to the receive chain through an interface. The interface combined the reflected signal from all the different objects in the environment and was directed to the receive chain. The atmospheric loss is currently kept at unity in the simulation. Both targets and clutter are modelled as simple point scatterers, with the targets modelled at specific range bins and clutter distributed in every range bin.

## 4 Receive chain

The receive chain of the radar model includes components to perform signal reception, signal amplification, signal down-conversion and analogue to digital conversion. The receive antenna receives the reflected signal from the environment. The receive antenna also provides amplification to the signal. Generally, the radar receiver includes thermal noise due to the random thermal fluctuation of electrons as described herein. In the whole radar model, a separate block was used to generate the thermal noise in the receiver chain of the radar system. The thermal noise block was placed after the receive antenna, as shown in Figure 1.

One of the crucial blocks in the receive chain of the whole radar model was the receive PLL. The frequency of the signal at the output of the receive PLL was different from the frequency of the signal at the output of the transmit PLL. The frequency offset between the transmit PLL and the receive PLL was equivalent to the IF. The combination of the mixer and BPF performed the down-conversion of the received signal to IF. The output of the receive PLL was mixed with the received signal. In the whole radar model, since both the signals were digital signals, a signal multiplier was used to mix the received signal. The ADC is another crucial block in the receive chain of a radar system. The ADC performs the fundamental operation of converting an analogue signal to a digital signal. Whenever the sampling rate of the ADC does not follow the Nyquist criteria, aliasing happens, and the input signal will be represented as a down-converted signal at the output of the ADC. According to the Nyquist criteria, to reliably reproduce a signal, the sampling frequency should be at least twice the maximum frequency of the signal. The Nyquist frequency is defined as twice the highest frequency of interest. When frequencies above half the Nyquist frequency are sampled, the frequencies are incorrectly detected as lower frequencies, the process known as aliasing. In the whole radar model, the signals were already in the digital domain, and ADC performed a second round of down-conversion through aliasing.

### 4.1 Receive antenna and thermal noise

The receive antenna is present in most wireless communication devices. In radars, the receive antenna is used to receive the signal from the environment. There are different kinds of radar antenna configurations depending on the application, including a single receive antenna or an array of receive antenna elements. These designs apply to both the transmit antenna and the receive antenna. An antenna array includes a collection of identical and uniformly spaced antenna elements that operate as a single unit. The signals received in the individual array elements are combined with the required phase relationship to enhance signals from the desired direction. A phased array antenna system includes phase shifters to steer the individual array elements in the desired direction.

Thermal noise is an inevitable factor in any electronic device. Thermal noise defines the lower bound for the target detection, and the radar range-Doppler plots are always limited by the thermal noise floor. As discussed in herein, the thermal noise depends on the bandwidth and the temperature of the radar receive chain. The thermal noise can be lowered by reducing the bandwidth, and the temperature of the radar receive chain.

### 4.1.1 Receive antenna in simulation

In the whole radar model, the receive antenna was designed as a simplified antenna with a constant antenna gain. The L-band staring radar used for validation includes a two-dimensional array of 64 receive antenna elements. Considering the time constraint on the simulation of the whole radar model, the simulation currently has a single receive antenna element. Adding more antenna elements adds more receive chain components, and the model can accommodate more antenna elements at the cost of simulation time. The output of the magnitude response blocks in the environment was connected to the input of the receive antenna through the interface. The receive antenna gain in the simulation was realised using an amplifier similar to the one described in section 2.3.1.

Consider a radar that transmits a series of $M$ pulses with $0 \le m \le M$ - 1, separated by a PRI of T. For a target with an initial range of $R_o$ and a velocity of v, the range of the target for the $m^{th}$ transmitted pulse is $R_o$ - $vmT$. For the $m^{th}$ transmitted pulse, the signal that reaches the receiver antenna will have a time delay equivalent to $\frac{2}{c}(R - vmT)$. The mathematical model for the delayed received signal is given by,

$$\begin{aligned} S_R(t) \quad &= S_T(t - \frac{2}{c}(R - vmT)), \\ &= A_R \cos[2\pi f_T t + 2\pi(\frac{2v}{\lambda})mT + (\theta - \frac{4\pi R_o}{\lambda})], \\ &= A_R \cos[2\pi f_T t + 2\pi f_d mT + \theta'], \end{aligned} \qquad (4)$$

where $\frac{2v}{\lambda} = f_d$ is the Doppler frequency of the target moving towards the radar and $\theta - \frac{4\pi R_o}{\lambda} = \theta'$ is the phase of the received signal. $A_R$ represents the amplitude of the received signal and follows the radar range equation.

Consider a radar model with a single stationary test target at a range of 600 m and a specific value of RCS. A target at a range of 600 m and a specific value of RCS is used. For a target at 600 m, the received signal will be delayed by 4 s compared to the transmitted signal. The time domain representation of the signal at the output of the transmit antenna and the signal at the output of the receive antenna is given in Figure 8. Figure 8 clearly shows a delay of 4 s between the transmitted and received signal as expected. The radar range equation provides the expected value of the received signal power.

For the test target at 600 m and the specific RCS value provided, the signal power at the output of the receive antenna is expected at -74.4 dB. The power spectrum of the signal at the output of the receive antenna is given in Figure 10. Figure 10 shows the output of the receive antenna peaked at -99.6 dB. Since the peaks in the power spectrum are reduced by a factor of 25.1 dB due to the RMS value, the received signal power is -74.5 dB, very close to the expected value of -74.4 dB.

### 4.1.2 Thermal noise in simulation

In the simulation, the thermal noise was added using a separate block. The thermal noise is dependent on both the bandwidth and the temperature. The thermal noise block in the simulation can provide any value to the noise temperature. The noise bandwidth in the simulation was equivalent to the sampling rate of the simulation. The sampling rate of the simulation was set to 5 GHz, greater than twice the value of any frequency used in the simulation, satisfying the Nyquist criteria. For a noise bandwidth of 5 GHz and noise temperature equivalent to room temperature (290 K), the expected thermal noise power will be -107 dBW. Figure 9 shows the histogram of the thermal noise power values generated by the thermal noise block. The Gaussian distribution of the thermal noise power values peaked at -107 dB can be seen in the histogram in Figure 9.

The SNR is an important parameter that defines the performance of the radar. The SNR of the received signal is given by Equation (5) The SNR of the received signal with an atmospheric loss factor of unity is given by,

$$SNR_R = \frac{P_T G_T G_R \lambda^2 \sigma}{4\pi^3 R^4 kTB}. \qquad (5)$$

The power spectrum of the signal at the output of the thermal noise block is compared with the power spectrum of the signal at the output of the receive antenna in Figure 10. In Figure 10, we can see the thermal noise at all the frequencies. The resolution bandwidth (RBW) of the power spectrum was 5 MHz, and the noise bandwidth was 5 GHz, resulting in the thermal noise floor in Figure 10 at -137 dB, 30 dB lower than the expected thermal noise power of -107 dB. *4.2 LNA*

An LNA is an essential component in the receive chain of most communication systems, especially radars. The LNA is an electronic amplifier capable of amplifying weak signals without significant degradation of the SNR. In radars, the LNA is generally located after the receive antenna to amplify the weak received signal and to provide power levels appropriate for the analogue to digital conversion or further processing in the analogue domain. The performance of an LNA can be measured using different parameters, including noise Figure, gain, and dynamic range. The gain of an LNA is defined as the amplification factor of the LNA. The LNA gain is specified in dB. The LNA's noise Figure (NF) is defined as the measure of degradation of the SNR of the received signal. For example, if an LNA has an SNR degradation of 3 dB at the output of the LNA compared to the input of the LNA, the NF of the LNA will be 3 dB. The radar engineers target to manufacture LNAs with NF as low as possible to reduce the degradation of the SNR due to LNA.

4.2.1 LNA in simulation

In the whole radar model, the LNA was realised using an amplifier with the option to specify the NF. The design of the LNA was based on the amplifier as discussed in the section 2.3.1. The LNA can provide any user-defined value of amplification. Along with the LNA gain, the LNA block can also specify any value of the NF. The mathematical model for the received signal at the output of LNA ($S_{LNA}$) is given by,

$$S_{LNA}(t) = A_{LNA} \cos[2\pi f_T t + 2\pi f_d mT + \theta'], \qquad (6)$$

where $A_{LNA}$ represents the amplitude of the received signal after the LNA. The SNR at the output of the LNA ($SNR_{LNA}$) is given by,

$$SNR_{LNA} = SNR_R - NF, \qquad (7)$$

where *NF* is the noise Figure of the LNA. The power spectrum of the signal at the output of the LNA is compared with the signal at the output of the thermal noise block in Figure 11. We can see the signal power and noise floor amplified by a factor equivalent to the LNA amplification factor. In Figure 11, we can also see the SNR at the output of the thermal noise block and LNA at 37.4 dB and 32.9 dB, respectively. The SNR at the output of the thermal noise block is reduced by a factor of 4.5 dB, equivalent to the LNA NF, compared to the SNR at the output of the thermal noise block.

The signal and noise powers at the output of the thermal noise block and the LNA are also compared by plotting the histograms in Figure 12. In Figure 12, the broad peak corresponds to the noise power, and the small peak towards the right end of the histogram corresponds to the peak signal power. Figure 12(a) shows the signal power and noise power after the thermal noise block peaked at -74.5 dB and -107 dB, respectively. Figure 12(b) shows the signal power and noise power after the LNA peaked at -10 dB and -38 dB, respectively. Figure 12 also shows the SNR at the output of the LNA reduced by 4.5 dB compared to the output of the thermal noise block.

*4.3 Receiver PLL and mixer*

One of the crucial steps in any of the receive chains of a radar system is to down-convert the received RF signal. The down-conversion to baseband can either be in s single step or through multiple steps as discussed herein. In most cases, the received RF signal is down-converted through multiple stages, with each stage having a corresponding IF. The down-conversion to IF is generally carried out by mixing the received signal with either the LO signal in the transmit chain or a signal derived from the LO signal and hence preserves the coherency.

The mixers are generally used in a vast number of RF applications. An RF mixer is a three-port device used to up-convert or down-convert the signal frequency. The mixers can either be passive or active. An ideal mixer changes an input signal's frequency while preserving the input signal's phase. The mixers are used in the radar receive chain to down-convert the RF signal to a convenient frequency to perform further processing steps. The mixer has two inputs, an RF and a LO input. The output of a mixer will have two frequencies, the sum of the two input frequencies and the difference between the two input frequencies. A typical mixer is illustrated in Figure 13.

The two important parameters that affect the SNR of the mixer output are the mixer conversion loss and the NF of the mixer. The mixer conversion loss is defined as the ratio between the input RF power and the output IF power. The NF of a mixer is defined as the ratio between the input SNR and the output SNR. For an ideal mixer with a LO input amplitude of unity and an RF input amplitude of *A,* the amplitude of each of the outputs will be equivalent to *A*/2. Since the power is proportional to the square of the amplitude, the power of each of the output signals of the mixer will be 1/4 times the input power. Hence, the conversion loss of an ideal mixer will be 6 dB. The NF of the mixer ($NF_{MXR}$) is related to the image frequency. Along with the desired frequency band, there is also an undesired frequency band known as the image frequency for a mixer that down-converts the RF to IF using the LO. If the noise is present in both the desired and image frequency band, the down-conversion folds back the noise in the image band on top of the noise in the desirable band, resulting in an NF of 3 dB.

### 4.3.1 Receiver PLL in simulation

In the whole radar model, the receive PLL was designed similarly to the transmit PLL. The receive PLL was designed as a direct digital synthesiser to output any user-defined frequency. The frequency at the output of the mixer was equivalent to the sum of the transmit frequency and the IF. The coherency between the receive PLL and the transmit PLL was achieved within the Simulink simulation. Both the transmit PLL and the receive PLL were run simultaneously in the simulation and were always turned on, making the phase relationship between the transmit PLL and the receive PLL coherent.

### 4.3.2 Mixer in simulation

In the whole radar model, the RF input of the mixer was connected to the output of the LNA, and the LO input of the mixer was connected to the output of the receive PLL. The output of the mixer included two frequencies. The difference frequency at the output of the mixer was equivalent to the IF1. The mixer in the simulation was realised using a product block to mix both the input signals.

The amplitude at the output of the receive PLL was kept at unity; hence, the mixer conversion loss followed the case of an ideal mixer and was obtained at 6 dB. The conversion loss affects both the signal and the noise equally, and the signal power and the noise power at the output of the mixer were 6 dB less than the output of the LNA. The effective SNR gain due to the conversion loss in the mixer was zero. In the simulation, the real-valued received signal was accompanied by the complex-valued thermal noise. Hence, the down-conversion folded the thermal noise present in the image band over the thermal noise present in the desirable band, making the noise Figure of the mixer equivalent to 3 dB. The SNR at the output of the mixer $SNR_{MXR}$ is given by,

$$SNR_{MXR} = SNR_{LNA} - NF_{MXR}, \qquad (8)$$

where $NF_{MXR}$ is the NF of the mixer. The power spectrum of the signal at the output of the mixer is compared with the signal at the output of the LNA in Figure 14. In Figure 14, we can see two peaks for the power spectrum at the output of the mixer. The two peaks correspond to the sum and difference frequency (IF1 signal). As expected, the mixer output spectrum peaks in Figure 14 are reduced by 6 dB compared to the LNA output spectrum. Since the conversion loss of the mixer is 6 dB and the NF of the mixer is 3 dB, the effective noise power at the output of the mixer will be reduced by 3 dB compared to the output of the LNA, as shown in Figure 14.

### *4.4 BPF*

Filters are present in most communication systems. The filters are electronic components used to allow or prevent specific signal frequencies. The filters are crucial in filtering out noise and reducing interference from external signals to improve the performance of communication systems. Generally, the filters can be divided into four categories: band-pass filter, band-reject filter, low-pass filter and high-pass filter. The BPF transmits a specific frequency band and blocks all the remaining frequencies. A band-reject filter blocks a specific band of frequency and transmits all the other frequencies. The low-pass filter transmits all the frequencies below a specific value, and the high-pass filter transmits all the frequencies above a specific value. In radars, BPF filters out all the out-of-band noises, thereby reducing the noise present in the receive chain of the radar system. The BPF is placed outside the mixer to transmit the difference frequency at the mixer's output and block the sum frequency.

4.4.1 BPF in simulation

In the whole radar model, the BPF was placed outside the mixer to transmit the difference frequency centred at the IF1. The mathematical model for the signal at the output of the BPF ($S_{BPF}$) is given by,

$$S_{BPF}(t) = \frac{A_{LNA}}{2}\cos[2\pi f_{IF1}t + 2\pi f_d mT + \theta'], \qquad (9)$$

where $\frac{A_{LNA}}{2} = A_{BPF}$ is the amplitude of the signal after the BPF. The signal power at the output of the BPF will be equivalent to the signal power of the difference frequency. The noise power at the output of the BPF is reduced by a factor of $B/B_{BPF}$, where $B$ is the noise bandwidth before the BPF and $B_{BPF}$ is the bandwidth of the BPF. The SNR at the output of the BPF ($SNR_{BPF}$) is given by,

$$SNR_{BPF} = SNR_{MXR} + 10log_{10}(\frac{B}{B_{BPF}}). \qquad (10)$$

In the whole radar model, a narrow bandwidth BPF was kept at the output of the mixer. The histogram of the output of the mixer and BPF is given in Figure 15. In Figure 15(a), we can see the signal power and noise power at the output of the mixer peaked at -41 dB and -10 dB, respectively. Even though the signal power at the output of the mixer is reduced by 6 dB, since both the frequency peaks are present before filtering, the signal peak at the output of the mixer in Figure 15(a) will be the same as the signal peak at the output of the LNA as shown in Figure 12(b). The noise power at the output of the mixer will be reduced by 3 dB compared to the output of the LNA, hence is expected at -41 dB. In Figure 15(b), we can see the signal power and noise power at the output of the BPF peaked at -61 dB and -16 dB, respectively.

Since the BPF allow only the difference frequency at IF, the signal power at the output of the BPF is expected at -16 dB. The noise power at the output of the BPF will be reduced by a factor equivalent to the bandwidth ratio as given in the Equation 10. For the BPF bandwidth provided in the simulation, the expected reduction in the noise power after the BPF is 23 dB, which was also confirmed by the power budget calculation. The thermal noise includes both the desired frequency and the image frequency band. The BPF operates on both the desired frequency band and the image frequency band, resulting in an additional 3 dB noise contribution from the image frequency band. Hence the effective decrease in the noise power after BPF will be 20 dB. In Figure 15, the noise power at the output of the mixer and BPF are -41 dB and -61 dB, respectively, showing a reduction of 20 dB in the noise power after the BPF as expected.

*4.5 ADC*

An analogue to digital converter is important in digital data processing systems. An ADC is an electronic integrated circuit that converts signals from the analogue to the digital domain. The signals in the analogue domain are continuous signals with continuous values, whereas the signals in the digital domain are represented by a sequence of discrete values. In radars, the ADC is located before the data processing blocks. The ADC in radars facilitates the transfer of analogue to digital signals to enable digital data processing to generate the target information. The important parameters in an ADC are the sampling rate, resolution and quantisation error.

4.5.1 Fundamentals of an ADC

The block diagram of a typical ADC is given in Figure 16. The sample block is used to sample the ADC input signal at a specific sampling frequency. The input signal of the ADC is continuous in both time and amplitude. The output of the sample block is a signal with discrete time and continuous amplitude. The hold block is used to hold the output of the sample block until the next batch of sample block output. The signal at the output of the hold block is discrete in time and continuous in amplitude and remains unchanged till the next sample set. The quantise block is used for the quantisation of the signal. The continuous analogue amplitude at the input is converted to the discrete amplitude at the output of the quantise block. The signal at the output of the quantise block is digital since the signal is discrete in both time and amplitude. The last block, the encoder block, converts the digital signal into binary form.

The sampling rate in ADC is defined as the number of samples taken in a second. With the increase in the sampling rate, the ADC can handle higher frequencies. The reconstruction of an analogue signal in the digital domain depends on the sampling rate - the higher the sampling rate, the better the signal is reconstructed. If the sampling rate of an ADC is lower than twice the frequency of the analogue signal, aliasing happens, and the recreated digital signal characteristics differ from the analogue signal.

The digital signals have a discrete and finite number of values and are represented using bits. Each number of bits corresponds to a specific number of steps in the digital signal. The resolution of an ADC is equivalent to the number of bits representing the amplitude of the digital signal. The number of steps increases exponentially with the number of bits. With the increase in bit resolution, the digital signal becomes closer to the original analogue signal.

The digitised signal at the output of the ADC will always be different from the analogue counterpart. The quantisation error is the difference between the analogue signal and the nearest accessible digital signal at each sampling instant. The quantisation error introduces noise in the system known as quantisation noise. Quantisation noise is one of the crucial noise components in the receive chain of a radar system. With the increase in the bit resolution, the difference between the digital and the analogue signal decreases, and the quantisation error and the quantisation noise decrease. For an ideal ADC, the quantisation noise and the bit resolution are defined in the signal-to-quantisation noise ratio. The signal-to-quantisation noise ratio for a number of bits equal to n is given by,

$$SN_qR = 20log(2^n). \qquad (11)$$

4.5.2 ADC in simulation

The ideal scenario was adding the comprehensive ADC simulation to the whole radar model. Since the signals in the Simulink are already in the digital domain, the ADC in the whole radar model was used to perform the frequency down-conversion through aliasing. The ADC was sampled at a specific ADC clock frequency, and the ADC clock frequency was below the IF1 at the input of the ADC. Through frequency aliasing, the output of the ADC was down-converted to IF2. The ADC was realised in the whole radar model using a signal-to-workspace block. The ADC clock frequency was realised by sampling the signal-to-workspace block at the required sampling frequency. The ADC in the whole radar model has the potential to add further sub-blocks to realise quantisation noise. The mathematical model of the signal at the output of the ADC is given by,

$$S_{ADC}(t) = A_{ADC}\cos[2\pi f_{IF2}t + 2\pi f_d mT + \theta'], \qquad (12)$$

where $A_{ADC}$ is the amplitude of the signal after the ADC and is equivalent to the signal amplitude before ADC. The ADC in the simulation does not alter the SNR, and hence the SNR at the output of the ADC becomes:

$$SNR_{ADC} = SNR_{BPF}. \qquad (13)$$

The histogram at the output of the ADC is given in Figure 17. Comparing Figures 17 and 15(b), we can see that there is no relative difference in the signal power or the noise power due to ADC. The signal-to-workspace block carried the Simulink data to the MATLAB workspace. All the radar data processing stages were realised in MATLAB.

**5 Data processing chain**

The data processing chain in the radar system is as crucial as the other subsections within a radar. The radar data processing chain performs the function of both improving the SNR of the signal and calculating the target characteristics. The target characteristics include mainly target range and target Doppler velocity. The processing chain can differentiate the targets and clutter in terms of range and velocity. One of the important aspects of the data processing chain is the data cube. A data cube is a three-dimensional matrix with receive channel number, slow time and fast time as the three axes. The fast time axis includes a single PRI. In the final stages of data processing, the fast time axis will be further subdivided into different range bins with a specific range resolution. The slow time axis is updated every PRI. The slow time corresponds to a single PRI, and the adjacent PRI data are stacked along the slow time axis. The fast time and the slow time together represent a data matrix as shown in Figure 18(a).

The data cube is an extension of the data matrix with multiple receive channels. The fast time and the slow time from each receive channel constitute a data matrix, and are stacked to form the data cube, as shown in Figure 18(b).

In the data processing chain, one of the methods to improve the SNR is by performing beam-forming. Beam-forming is performed in cases where multiple receive antenna elements are present in a radar system. In radars, beam-forming is the technique in which the receive antenna arrays can be focused over any angle in the elevation and azimuth to improve the SNR. The whole radar model currently includes only one receive antenna element; hence, the beamforming is not performed in the data processing chain of the radar simulation. The components in a radar system's data processing chain depend on the radar's function. In a pulsed Doppler radar system, the data processing chain typically includes Hilbert transform, matched filtering, windowing, FFT, and range-Doppler plot generation. The Hilbert transform is the process of generating a complex-valued signal from a real-valued signal. Matched filtering involves the convolution of an unknown signal with a conjugated time-reversed reference signal to improve the SNR of the signal in the presence of random noise. In the whole radar model, the Hilbert transform and the matched filtering block is used to perform both operations on the signal at the output of the ADC.

In radars, the FFT is performed to extract the frequency-domain information of the time-domain signal. The Fourier transform is also used to improve the SNR through pulse integration. The pulse integration can follow coherent and non-coherent fashion depending on the signal characteristics. The FFT is applied across the slow time axis. In the whole radar model, windowing is performed prior to the FFT to reduce the frequency components' leakage effects on the Fourier transform. A range-Doppler plot is generated by performing an FFT across the slow time axis of a data matrix. In the whole radar model, the windowing and FFT are followed by range-Doppler plot generation to provide the range and Doppler information of both the targets and clutter.

5.1 Hilbert transform and Matched filtering

In data processing, the Hilbert transform is defined as a linear operator when acted on a real-valued function x(t) produces function H[x(t)], . Mathematically, the Hilbert transform of x(t) is given as,

$$\hat{x}(t) = H[x(t)] = x(t) * \frac{1}{\pi t}, \qquad (14)$$

where $*$ denotes convolution operation. The Hilbert transform helps to generate an analytical signal. An analytic signal is a complex-valued function with no negative frequency components. The real and imaginary parts of an analytic signal are real-valued functions related to each other by the Hilbert transform. The analytic signal at the output of a Hilbert transform can be defined as,

$$z(t) = x(t) + j\hat{x}(t). \qquad (15)$$

The real and imaginary parts of the equation 15 are known as the in-phase and quadrature values. In the frequency domain, the Hilbert transform imparts a phase shift of 90° to the signal. In radars, the Hilbert transform is one of the methods used to down-convert the signal to the baseband. The Hilbert transform is generally performed through quadrature detection, where an IF signal is down-converted to the baseband along with the generation of the in-phase and the quadrature baseband signal. Hilbert transform and the generation of the analytic in-phase and quadrature signals are crucial in data processing and Doppler velocity calculation.

In communication systems, the matched filter is used as a linear filter to improve the SNR of a signal in the presence of additive white Gaussian noise. The matched filter is a linear filter in the time domain based on the principle of correlation between the received signal and a reference signal to improve the SNR of the received signal. For an ideal matched filter, maximum SNR is obtained when the reference signal is a time-delayed mirror image of the received signal.

5.1.1 Hilbert transform and matched filtering in simulation

In the whole radar model, the Hilbert transform and matched filtering block was used to bring the IF2 down to the baseband and to perform matched filtering. The simplified mathematical model of the baseband complex signal at the output of the Hilbert transform is given by,

$$S_{HT}(t) = A_{HT} e^{(2\pi f_d mT + \theta\prime)}, \qquad (16)$$

where $A_{HT}$ is the signal's amplitude after the Hilbert transform. The complex baseband radar signal is used to measure the phase and amplitude independently. The matched filter for the whole radar model was derived from the transmitted pulse. The MATLAB code for matched filtering was used to generate the matched filter output. The mathematical model of the signal at the output of the matched filter is given by,

$$S_{MF}(t) = A_{MF}e^{(2\pi f_d mT + \theta_I)}, \qquad (17)$$

where $A_{MF}$ is the signal's amplitude at the output of the matched filter. The crucial parameter in matched filtering is the gain of the matched filter. The gain of the matched filter is dependent on the matched filter coefficient. For a matched filter that provides an SNR gain of $G_{MF}$, the SNR at the output of the matched filter ($SNR_{MF}$) is given by,

$$SNR_{MF} = SNR_{ADC} + G_{MF}. \qquad (18)$$

The time domain representation of the signal at the input and output of the matched filter is given in Figure 19. A rectangular pulse undergoes matched filtering to output a triangular waveform. Since matched filtering performs the correlation between the input signal and the reference signal, the matched filtered output of a rectangular pulse will be peaked at the endpoint of the input signal. For any finite input signal, the duration of the matched filter output is twice the duration of the input signal. Since the input to the matched filter is a near rectangular pulse and the reference derived from the transmit signal is also a near rectangular pulse, the output of the matched filter in Figure 19 is a triangular pulse as expected. The duration of the matched filter output in Figure 19 is twice the duration of the input signal and is also peaked at the endpoint of the input signal. The histogram at the output of the matched filter is given in Figure 20. The signal and noise power at the output of the matched filter are 79 dB and 23.5 dB, respectively. Comparing Figures 20 and 17, we can see the SNR at the output of the matched filter improved by a factor of 10.5 dB. The improvement by matched filtering is very close to the expected value confirmed using the staring radar power budget.

*5.2 Windowing, FFT and range-Doppler plot*

Fourier analysis converts a signal in its time or space domain to a representation in the frequency domain or vice versa. An FFT is an algorithm to perform Fourier analyses, including both the discrete Fourier transform (DFT) and the inverse discrete Fourier transform (IDFT). The DFT of a signal is obtained by decomposing the signal into its frequency components. The FFT is used in a wide range of applications in communication systems. In radars, FFT converts the time domain signal into the frequency domain. The FFT is one of the crucial data processing techniques used in radars to obtain the Doppler information of the targets.

FFT is performed along the direction of the slow time axis in the data matrix or data cube. Performing FFT on a data matrix or data cube results in a range-Doppler plot with the slow time converted to the Doppler axis and fast time converted to the range axis. The Doppler axis includes Doppler bins, and the range axis includes range bins. Generally, in pulsed Doppler radars, the range-Doppler plot is used to represent the processed data from the radars. The range-Doppler plot includes the range and Doppler information of targets and clutter. The range-Doppler plot can also be used to analyse the relative signal strength from different scatterers and to evaluate the effect of phase noise in radar target detection.

In radars, the FFT also performs pulse integration to improve the SNR. Since the FFT is performed along the slow time, the pulse integration is also performed along the slow time axis that includes stacks of received pulses. The FFT performs coherent integration of both the signal and the noise. For a coherent integration of $N$ pulses including both the signal and noise, the power in the integrated signal component is increased by $N^2$ and the integrated noise power is increased by $N$. Hence, the effective increase in the SNR is $N$ in dB.

For any timed-domain signal undergoing Fourier transform to the frequency domain, the discontinuities due to the non-integer number of periods of the waveform result in frequency components leaking into adjacent frequency bins. The leakage causes the fine spectral lines in FFT to spread and is known as spectral leakage. The spectral leakage is minimised by a technique known as windowing. The windowing multiplies the measured time domain discontinuous signal with an amplitude envelope that approaches zeros at both ends. The SNR at the output of the windowing is degraded by a factor known as the loss factor. The loss factor is defined as the ratio of the maximum achievable SNR (SNR without windowing) to the actual SNR (SNR with windowing). Depending on the application, there are different kinds of windowing functions, including hamming window, Hanning window, and Blackman-Harris window.

5.2.1 Windowing, FFT and range-Doppler plot in simulation

The whole radar model applies windowing to the time domain signal before performing the FFT to generate the range-Doppler plot. Following the staring radar, Blackman-Harris windowing was applied in the data processing chain of the radar model. The SNR at the output of windowing ($SNR_W$) is given by,

$$SNR_W = SNR_{MF} - LF, \qquad (19)$$

where *LF* is the loss factor of the Blackman-Harris window. The FFT was performed after windowing. The SNR at the output of the FFT ($SNR_{FFT}$) is given by,

$$SNR_{FFT} = SNR_W + N, \qquad (20)$$

where N is the number of pulses. Depending on the requirements, the FFT can be performed with any number of pulses. In the whole radar model, the FFT was performed with 2048 pulses (N = 2048). Since only a single stationary test target was present in the simulation, the FFT with 2048 pulses considerably reduces the number of occurrences of the target peak in the histogram. Hence, it is impossible to represent the signal power at the output of the FFT in the histogram plots. The range-Doppler plot with the stationary target at 600 m is given in Figure 21. Figure 21 includes the range-Doppler plots with and without Blackman Harris windowing. A range Doppler plot includes a number of range bins on the vertical axis depending on the configuration of the radar. The number of Doppler bins in the horizontal axis is the same as the number of pulses used to generate the range-Doppler plot. The range-Doppler plot in Figure 21 includes 15 range bins and central Doppler bins equivalent to a span of 1400 Hz.

An FFT of 2048 pulses provides an SNR gain of 33 dB. The range-Doppler plot without the Blackman-Harris window in Figure 21(a) has a target peak power of 145 dB and average noise power of 56.5 dB, equivalent to an SNR of 88.5 dB. Since the SNR at the output of the MF was 55.5 dB, as depicted in Figure 20, the 88.5 dB SNR at the output of the FFT is equivalent to the expected value of a 33 dB increase in the SNR. The range-Doppler plot with the Blackman-Harris window given in Figure 21(b) has a target peak power of 136 dB and average noise power of 51 dB, equivalent to an SNR of 85 dB. The SNR of 85 dB at the output of the FFT with windowing is 3.5 dB lower than the value of 88.5 dB at the output of the FFT without windowing. The windowing follows the loss factor of the Blackman-Harris window. The loss factor of a Blackman-Harris windowing is between 3 - 3.5 dB , and the SNR values calculated from Figure 21 also show a loss factor of 3.5 dB. In the simulation, the waveforms in the Fourier transform with stationary targets include only an integer number of periods. Hence, the frequency spread to adjacent frequency bins will not be visible in the stationary targets.

## 6 Validation of radar model

A radar model can be validated by comparing the results of a radar model with both theory and real radar data. By comparing the important metrics in the range-Doppler plot, it is possible to evaluate and validate a simulated radar model with a real radar in the best possible way. The SNR and clutter-to-noise ratio (CNR) are the two important metrics in a range-Doppler plot.

The whole radar model described in herein benefits from the ability to simulate targets and clutter in the environment at any given range, velocity, and RCS. The whole radar model is validated by comparing the simulated results with the experimentally measured results from the L-band staring radar. The validation of the radar model was facilitated by generating simulated data equivalent to a full coherent processing interval (CPI). The CPI included a time duration equivalent to 2048 PRIs. An actual range-Doppler plot from a radar trial was compared with the simulated range-Doppler plot to validate the model. A number of range bins and 2048 Doppler bins make up the real range-Doppler plot.

A three-level validation was performed to verify the correctness of the simulated whole radar model. The system-level signal powers and SNR values at the output of the various blocks of the simulation were compared with the expected values in the first level of validation. The fundamental parameters from the generated range-Doppler plot and the fundamental parameters from the real radar were compared in the second stage of validation. The CNR, the SNR, and the thermal noise floor from the simulated and real range-Doppler plots were compared at the third stage of validation.

*6. 1 Comparison of system-level signal power and SNR*

The first level of validation was performed by comparing the SNR and the system-level signal power at the output of different building blocks in the transmit chain, the receive chain, and the data processing chain. A single stationary clutter was simulated at a range of 600 m and an arbitrary RCS value in the first stage of validation. Simulation time equivalent to a full CPI was performed. The signal power, noise power, and SNR values were measured using the test probes placed at the output of the building blocks within the radar model. It is convenient to divide the first stage of validation into two sections. The signal powers are compared in the first section, and the SNR values are compared in the second.

Table 1: Simulated and expected values of signal powers at the output of different radar building blocks

| Radar block | Simulated (dB) | Expected (dB) | Difference (dB) |
|---|---|---|---|
| Transmit amplifier | 33.0 | 33.0 | 0.0 |
| Transmit antenna | 45.5 | 45.5 | 0.0 |
| Receive antenna | -74.5 | -74.4 | 0.1 |

In the first section, the simulated signal power at the output of the transmit amplifier, the transmit antenna, and the receive antenna, as given in the Figures 7 and 8 is compared with the expected values. The expected value of the signal power at the output of the transmit amplifier and the transmit antenna was taken from the staring radar power budget. The expected value of the signal power at the output of the receive antenna was calculated from the radar range equation. The comparison of the simulated and expected values of signal powers are summarised in the Table 1. Table 1 shows the expected values of the signal power at the output of the transmit amplifier and the transmit antenna precisely the same as the expected value. The simulated value of the signal power at the output of the receive antenna is offset by a negligible value of 0.1 dB.

Table 2: Simulated and expected values of SNR at different stages in receive chain and data processing chain building blocks

| Radar block | Simulated (dB) | Expected (dB) | Difference (dB) |
|---|---|---|---|
| Before LNA | 32.5 | 32.6 | 0.1 |
| After LNA | 28.0 | 28.1 | 0.1 |
| After mixer | 25.0 | 25.1 | 0.1 |
| After BPF | 45.0 | 45.1 | 0.1 |
| After ADC | 45.0 | 45.1 | 0.1 |
| After matched filter | 55.5 | 55.1 | -0.4 |
| After FFT | 88.5 | 88.1 | -0.4 |

The simulated SNR at the output of each building block in the receive chain and data processing chain was compared to the expected values of the SNR in the second section. The simulated SNR values were determined using the signal power and thermal noise power at each building block's output. Radar theory and power budget reference values were used to compute the expected SNR values. The simulated and expected values of the SNR at the outputs of different radar building blocks are summarised and compared in the Table 2. Table 2 shows a good agreement between the simulated and the expected SNR values at the output of every building block. The constant offset of 0.1 dB between the expected and the simulated SNR is present in all the values of SNR starting from the receive antenna. The difference of 0.1 dB in Table 2 is attributed to the small difference in the parameters for the target modelling. The SNR at the output of the matched filter and the FFT in Table 2 is offset by -0.4 dB. The difference of - 0.4 dB is the net effect of 0.5 dB disparity in the expected and simulated value of SNR gain in matched filtering, along with the constant offset of 0.1 dB present across all building blocks. The high parity between the simulated and expected values of the system-level signal power and the SNR represented in the Table 1 and 2 shows the fidelity of the building blocks of the simulated radar model with the theory and staring radar power budget.

*6.2 Comparison of range and Doppler basic parameters*

Having compared the system-level signal power and SNR in the first level of validation in section 6.1, the fundamental parameters from the range-Doppler plots of both the simulation and staring radar are compared in the second level of validation. Along with the stationary clutter at 600 m and an arbitrary RCS, a moving target at a range of 1500 m and an arbitrary RCS was also simulated in the second level of validation. The RCS and range values were arbitrary and did not adhere to any particular reference. The target was kept moving at 251 Hz, equivalent to a velocity of 30 m/s for the particular L-band transmit frequency of the radar. A range-Doppler plot with thermal noise was simulated using the whole radar model, including both the clutter and the target.
The simulated range-Doppler plot included a number of range bins. The PRF of the simulated range-Doppler plot was the same as the staring radar range-Doppler plot. Figure 22 shows the simulated range-Doppler plot with the range bin on the vertical axis and the Doppler frequency on the horizontal axis. Figure 30 clearly shows a target (highlighted in red) with a Doppler frequency of around 251 Hz and a stationary clutter (highlighted in green) with a Doppler frequency of 0 Hz, confirming the ability of the whole radar model to simulate target and clutter at user-defined velocities.

The second level of validation compares the range and Doppler basic parameters, including range bin, Doppler bin, range resolution, and Doppler resolution for both the simulated radar model and the L-band staring radar. Figure 22 was used to measure the range and the Doppler bin for both the target and the clutter. The range resolution and the Doppler resolution for the simulated whole radar model were also calculated from Figure 22. There was excellent agreement in the range resolution and Doppler resolution between the simulated radar model and the real radar. The comparison of the basic parameters, including the range bin and the Doppler bin for the simulated radar model and the staring radar, are summarised in Table 3.

Table 3: Simulated and expected values of range and Doppler basic parameters

| Parameter | Simulated | Expected |
|---|---|---|
| Clutter range bin | 5 | 5 |
| Target range bin | 17 | 17 |
| Clutter Doppler bin | 0 | 0 |
| Target Doppler bin | 70 | 70 |

The simulated values correspond to the values measured from the simulated range-Doppler plot in Figure 22. The range resolution and Doppler resolution of the staring radar were used to calculate the expected values of the range bin and the Doppler frequency bin for both the clutter and the target. Table 3 shows that the basic parameters from the simulation are the same as the expected parameters from the actual radar. The section concludes that the radar model has the ability to replicate staring radar range and Doppler basic parameters in the simulation. The radar model discussed herein has the potential to optimise all the basic parameters, including the range resolution, Doppler resolution, CPI, and PRF, to any user-required configuration.

*6.3 Comparison of whole range-Doppler plots*

The third stage of validation compares and validates the CNR, SNR, and thermal noise floor from the simulated range-Doppler plot with the real radar range-Doppler plot. The range-Doppler plot of an actual radar experiment was used as a reference for the third level of validation. The L-band staring radar was used for the actual radar trial, conducted on an airfield with a controlled drone (the target of interest) flying along a predetermined course. The real range-Doppler plot was made up of a single frame from a single beam at a fixed azimuth and elevation angle centre on the direction of the target of the drone radar trial, equivalent to a complete CPI. For the chosen frame, the drone approached the radar at a specific distance and radial velocity of 8.3 m/s. Even though the radar trial was performed in a rural environment, the real range-Doppler plot included other unwanted targets in the radar's field of view.

The third stage of validation was performed by simulating the actual range-Doppler plot using the comprehensive radar model. A range-Doppler plot was initially simulated with the CNR from the simulation and the CNR from the actual range-Doppler plot close to each other. The current model is not able to simulate the exact replica of the CNR for every range bin since each range bin's clutter power leaks to the neighbouring range bins. For both the real and simulated range-Doppler plots, the CNR was calculated taking into account thermal noise.

Table 4: Clutter-to-noise ratios from simulated and real range-Doppler plots for different range bins

| Range bin | Simulated CNR (dB) | Expected SNR (dB) | Difference (dB) |
|---|---|---|---|
| A | 103.43 | 105.72 | 2.29 |
| B | 94.96 | 90.13 | -4.33 |
| C | 93.89 | 91.92 | -1.97 |
| D | 96.85 | 96.78 | -0.07 |
| E | 65.24 | 64.79 | -0.45 |
| F | 73.19 | 72.79 | -0.4 |

Table 4 compares the CNR from the simulated range-Doppler plot with the CNR from the real range-Doppler plot for different range bins. The real radar environment includes a wide variety of clutter, each with a different RCS. In the simulation, the clutter power is replicated by modelling a single clutter in each range bin to represent the combination of real-world clutter. Also, in the simulation, the clutter power from each range bin leaks to the adjacent range bins. Hence, it is acceptable to have a few dB of variation in the CNR levels between the simulation and the real data. The values in Table 4 demonstrate a strong agreement between the simulated and real CNR.

The second step in the final level of validation added the target information to the range-Doppler plot in simulation. The target drone was represented in the simulation as an object at a distance equal to the target's real range. The target's Doppler frequency was simulated at 69.8 Hz, equivalent to the drone velocity of 8.3 m/s. The RCS of the drone was modelled such that the SNR of both the simulation and real data are comparable..

For any real radar, phase noise plays a significant role in target detection. The radar system's phase noise causes the range-Doppler plot's phase noise floor to emerge out of the thermal noise floor in range bins with stronger clutter power. The increase in the overall noise floor makes the detection of targets difficult. The introduction of the phase noise in the radar simulation and the effects of the phase noise in the range-Doppler plot is discussed herein.

The comparison of the simulated range-Doppler plot with the real range-Doppler plot is given in Figure 23. Both the range-Doppler plots in Figure 23 are normalised to the strongest clutter. Figure 23(a) shows the simulated range-Doppler plot, and Figure 23(b) shows the real range-Doppler plot. In Figure 23(b), the increase in the overall noise floor and the emergence of the phase noise floor over the thermal noise floor is visible at ranges with extremely high clutter. Since the phase noise is not added to the whole radar model simulation, the simulated range-Doppler plot in Figure 23(a) includes only the uniform thermal noise floor. The real range-Doppler plot in Figure 23(b) also includes extra peaks corresponding to the unwanted targets in the radar field of view.

Apart from the phase noise floor and unwanted targets, the simulated and the actual range-Doppler plot are qualitatively similar in Figure 23. The clutter power for each range bin independently does not match because the CNR for each range bin cannot be precisely recreated in the simulation. The target of interest is highlighted inside a red box for both the range-Doppler plots in Figure 33. In both the simulated and real range-Doppler plots, the target appears at the 19th range bin and 19th Doppler bin. The signal-to-thermal noise ratio of the target was calculated from both the simulated and real range-Doppler plots and is given in the Table 5. Table 5 shows an excellent agreement between the simulated and the real signal-to-thermal noise ratio. The high level of parity in signal-to-thermal noise ratio confirms the ability of the comprehensive radar model to simulate a range-Doppler plot with the target and thermal noise floor that replicates the values from a real range-Doppler plot.

Table 5: The calculated signal-to-thermal noise ratio from the simulated and the real range-Doppler plots

| Parameter | Simulated | Real |
|---|---|---|
| Signal-to-thermal noise ratio (dB) | 33.17 | 32.34 |

The peak clutter power and the thermal noise floor for each range bin were taken from the Figures 23(a) and 23(b) to generate a comparison graph. The thermal noise floor refers to the noise floor for the range bin considerably away from the radar, where the effect of the clutter-induced phase noise is negligible. The graph in Figure 24 compares the simulated and the real range-Doppler plot from the Figures 23(a) and 23(b), respectively.

Figure 24 clearly shows the overlapping thermal noise floor for both the real and simulated range-Doppler plots. The comparison graph also shows a good agreement between the simulated and real clutter power. The clutter power for the range bin 21 from the real range-Doppler plot was an exception which could not be replicated in the simulation. The clutter in real radar includes complex objects and other weather phenomena in the radar field of view. In contrast, the clutter in the simulation is represented by a single stationary clutter in each range bin. Since the pulse width of the radar is longer than the range bin, there is an extra effect of leaking the clutter power to the adjacent range bins. Because of these two effects, the clutter power in every range bin cannot be replicated with full parity in the simulation. Figures 23(a), 23(b), and 24, along with Tables 4 and 5 show confidence and fidelity of the comprehensive radar model to replicate real staring radar trial in the simulation.

The range-Doppler plot of the radar trial realised in the simulation and the real staring radar trial is given in Figure 25(c).

Figure 25(c) clearly shows good parity between the real and simulated range-Doppler plot with classical oscillator phase noise. Figure 25(c) represents the capability of the comprehensive radar model to replicate real staring radar trials with a great level of detail. The real range-Doppler plot in Figure 25(b) includes unwanted targets in the radar field of view along with the target of interest. At the same time, only the target of interest was modelled in the simulated range-Doppler plot in Figure 25(a). In both the range-Doppler plots in Figure 25(c), we can clearly see the presence of phase noise floor. The phase noise floor can be seen coming out of the thermal noise floor for range bins with higher clutter power. Since the reflected power from the clutter is inversely proportional to the fourth power of the clutter range, in almost all cases, the range bins closer to the radar will have the highest clutter powers. In figure 7, the phase noise floor can be evidently seen coming out of the thermal noise floor in range bins close to the radar (range bins 1 - 4), where the clutter power is high. The effect of phase noise is also visible for range bins 6, 7, 9, and 10, with relatively higher clutter power.

A better comparison of the relationship between the simulated and real-range range-Doppler plot with classical oscillator phase noise is given in Figure 26. The comparison graph in Figure 26 shows the peak clutter power, the thermal noise floor, and the overall noise floor for both the simulated and real range-Doppler plot in Figure 25(c). The thermal noise floor refers to the noise floor for the range bin considerably away from the radar, where the effect of the clutter-induced phase noise is negligible. The comparison graph in Figure 26 is an extended version of the comparison graph described previously with the inclusion of the overall noise floor in each range bin. The overall noise floor consists of both the thermal noise floor and the phase noise floor.

Figure 27 schematically depicts a method according to an exemplary embodiment.

The method is of simulating a RADAR system defined by a corresponding RADAR model comprising a transmit chain, a receive chain and a data processing chain, the method implemented by a computer comprising a processor and a memory, the method comprising:

transmitting, by the transmit chain, a radio frequency, RF, signal into an environment including a target and optionally, clutter (2702);
calculating respective reflected RF signals of the transmitted RF signal from the target and from the optional clutter (2704);
receiving, by the receive chain, the respective reflected RF signals (2706);
detecting, by the data processing chain, the target using the received respective reflected RF signals (2708); and
determining a simulated output of the RADAR system using a result of detecting the target (2710).

Figure 28 schematically depicts a method according to an exemplary embodiment.

The method is of validating a RADAR model, comprising a transmit chain, a receive chain and a data processing chain, corresponding to a RADAR system, the method implemented by a computer comprising a processor and a memory, the method comprising:

obtaining an acquired output from the RADAR system of an environment including a target and optionally, clutter (2802);
creating the RADAR model corresponding to the RADAR system (2804);
determining a simulated output of the RADAR model for the environment including the target and optionally, the clutter, by simulating the RADAR model (2806); and
validating the RADAR model by comparing the simulated output and the acquired output (2808).

## 7 Conclusion

Presented herein is the development of the comprehensive radar model in the simulation and the validation of the radar model with data from the real radar. A radar model including all the fundamental building blocks in the transmit chain, the receive chain, and the data processing chain, along with targets and clutter in the environment, is a powerful tool to test hypothetical and real radar scenarios. Such a comprehensive radar model was developed from scratch, with a focus on the behaviour of the radar hardware building blocks. The radar model was validated by comparing the results generated in the simulation with the actual experimental results from the L-band staring radar. The radar model was capable of replicating the real radar parameters at various levels.

A detailed study that characterises the performance of different classical and quantum oscillators will enable the comprehensive radar model to analyse the limitations of conventional radar oscillator phase noise and explore the potential advantages of quantum oscillators in radar systems.

Although a preferred embodiment has been shown and described, it will be appreciated by those skilled in the art that various changes and modifications might be made without departing from the scope of the invention, as defined in the appended claims and as described above.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

**Claims**

1. A method of validating a RADAR model, comprising a transmit chain, a receive chain and a data processing chain, corresponding to a RADAR system, the method implemented by a computer comprising a processor and a memory, the method comprising:

   obtaining an acquired output from the RADAR system of an environment including a target and optionally, clutter;
   creating the RADAR model corresponding to the RADAR system;
   determining a simulated output of the RADAR model for the environment including the target and optionally, the clutter, by simulating the RADAR model; and
   validating the RADAR model by comparing the simulated output and the acquired output.

2. The method according to claim 1, wherein comparing the simulated output and the acquired output comprises comparing respective signal powers and/or signal to noise ratios, SNR, values of the transmit chain, the receive chain and/or the data processing chain with expected values thereof.

3. The method according to claim 2, wherein comparing respective signal powers and/or signal to noise ratios, SNR, values of the transmit chain, the receive chain and/or the data processing chain with expected values thereof comprises comparing respective signal powers and/or signal to noise ratios, SNR, values of outputs of the transmit chain, the receive chain and/or the data processing chain with expected values thereof.

4. The method according to any previous claim, wherein comparing the simulated output and the acquired output comprises comparing fundamental parameters of the simulated output and fundamental parameters of the acquired output.

5. The method according to claim 4, wherein comparing fundamental parameters of the simulated output and fundamental parameters of the acquired output comprises comparing fundamental parameters of a generated range-Doppler plot of the simulated output and fundamental parameters of a range-Doppler plot of the acquired output.

6. The method according to any previous claim, wherein comparing the simulated output and the acquired output comprises comparing the clutter to noise ratio, CNR, the signal to noise ratio, SNR, and/or the thermal noise floor of the simulated output and the acquired output.

7. The method according to claim 6, wherein comparing the CNR, the SNR, and/or the thermal noise floor of the simulated output and the acquired output comprises comparing the CNR, the SNR, and/or the thermal noise floor of of a generated range-Doppler plot of the simulated output and of a range-Doppler plot of the acquired output.

8. The method according to claim 7, wherein the CNR accounts for thermal noise.

9. The method according to any previous claim, comprising:

   adapting the RADAR model, for example the transmit chain, the receive chain and the data processing chain; and
   optionally, modifying the target and/or the optional clutter;
   wherein calculating the respective reflected RF signals of the transmitted RF signal from the target and from the optional clutter comprises calculating the respective reflected RF signals of the transmitted RF signal from the modified target and from the optional modified clutter.

10. The method according to any previous claim, wherein the transmit block comprises a quantum oscillator.

11. A method of providing a RADAR system, the method implemented, at least in part, by a computer comprising a processor and a memory, the method comprising:

   validating a RADAR model, comprising a transmit chain, a receive chain and a data processing chain, corresponding to the RADAR system; and
   providing the RADAR system using a result of validating the RADAR model.

12. The method according to claim 11, comprising adapting the RADAR model based on the result of validating the RADAR model.

13. The method according to claim 12, comprising validating the adapted RADAR model.

14. A RADAR system provided by a method according to any of claims 11 to 13.

15. A computer comprising a processor and a memory configured to implement a method according to any of claims 1 to 13, a computer program comprising instructions which, when executed by a computer comprising a processor and a memory, cause the computer to perform a method according to any of claims 1 to 13 or a non-transient computer-readable storage medium comprising instructions which, when executed by a computer comprising a processor and a memory, cause the computer to perform a method according to any of claims 1 to 13.

XA23285

Fig.1

Fig.2

XA23285

Fig.3

Fig.4

XA23285

Fig.5

Fig.6

XA23285

Fig.7

Fig.8

XA23285

Fig.9

Fig.10

XA23285

Fig.11

XA23285

Fig.12(a)

Fig.12(b)

XA23285

Fig.13

Fig.14

XA23285

Fig.15(a)

Fig.15(b)

XA23285

**Fig.16**

**Fig.17**

XA23285

Slow time

Fast time

PRI

Fig.18(a)

Receive channels

Slow time

Fast time

Fig.18(b)

XA23285

Fig.19

Fig.20

XA23285

Fig.21(a)

Fig.21(b)

XA23285

Fig.22

XA23285

Fig.23(a)

Fig.23(b)

XA23285

Fig.24

XA23285

Fig.25(a)

Fig.25(b)

XA23285

Fig.25(c)

>20 dB

Legend:
- Overall noise - classical
- Overall noise - quantum
- Clutter - classical
- Clutter - quantum
- Thermal noise - classical
- Thermal noise - quantum

Fig.26

XA23285

2700

START

2702

TRANSMIT RF SIGNAL

2704
CALCULATE
REFLECTED RF
SIGNALS

2706

RECEIVE REFLECTED
RF SIGNALS

2708

DETECT TARGET

2710

DETERMINE
SIMULATED OUTPUT

END

Fig.27

XA23285

2800

START

2802

OBTAIN OUTPUT
FROM RADAR

2804

CREATE RADAR
MODEL

2806

DETERMINE
SIMULATED OUTPUT

2808

VALIDATE RADAR
MODEL

END

Fig.28

Europäisches
Patentamt

European
Patent Office

Office européen
des brevets

## EUROPEAN SEARCH REPORT

Application Number

EP 23 27 5056

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 112 417 757 A (CHINA AUTOMOTIVE TECH & RES CT ET AL.) 26 February 2021 (2021-02-26) * paragraph [0073] - paragraph [0075] * * paragraph [0089] * | 1-15 | INV. G01S7/40 |
| Y | US 2021/224436 A1 (CAMPS RAGA BRUNO F [US] ET AL) 22 July 2021 (2021-07-22) * abstract; figures 1, 3-5 * * paragraph [0021] - paragraph [0045] * * paragraph [0055] - paragraph [0081] * | 1-15 | |
| Y | Dmitriy Garmatyuk: "High-resolution radar system modeling with MATLAB/SIMULINK", Defense Electronics, 1 August 2006 (2006-08-01), pages 12-19, XP055052543, Retrieved from the Internet: URL:http://rfdesign.com/mag/608RFDEf2.pdf [retrieved on 2013-02-06] * the whole document * | 1,15 | |

TECHNICAL FIELDS
SEARCHED      (IPC)

G01S

The present search report has been drawn up for all claims

| Place of search | Date of completion of the search | Examiner |
|---|---|---|
| Munich | 31 August 2023 | López de Valle, J |

## ANNEX TO THE EUROPEAN SEARCH REPORT
## ON EUROPEAN PATENT APPLICATION NO.

EP 23 27 5056

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | | Publication date | Patent family member(s) | | Publication date |
|---|---|---|---|---|---|
| CN 112417757 | A | 26-02-2021 | NONE | | |
| US 2021224436 | A1 | 22-07-2021 | CN | 113219420 A | 06-08-2021 |
| | | | EP | 3855206 A1 | 28-07-2021 |
| | | | US | 2021224436 A1 | 22-07-2021 |
| | | | US | 2022188483 A1 | 16-06-2022 |

EPO FORM P0459

For more details about this annex : see Official Journal of the European Patent Office, No. 12/82